# EUROPÄISCHE PATENTSCHRIFT

(11) **EP 1 504 993 B1**
(45) Veröffentlichungstag und Bekanntmachung des Hinweises auf die Patenterteilung: **07.05.2008**
(21) Anmeldenummer: 04017056.5
(22) Anmeldetag: 20.07.2004
(51) Int. Cl.: B64D 13/00

(54) **Klimaanlage eines Verkehrsflugzeugs**
Air conditioning system of a passenger aircraft
Système de conditionnement d'air d'un avion de transport de passagers

(30) Priorität: 02.08.2003 DE 10335482
(43) Veröffentlichungstag der Anmeldung: 09.02.2005
(73) Patentinhaber: Airbus Deutschland GmbH, 21129 Hamburg (DE)
(72) Erfinder: Kelnhofer, Jürgen, Dipl.-Ing., 21635 Jork (DE)
(74) Vertreter: Beyer, Andreas

(56) Entgegenhaltungen:
- EP-A- 1 251 069
- FR-A- 747 754
- FR-A- 765 564
- FR-A- 1 055 264
- US-A- 1 943 233
- US-A- 3 347 496
- US-A- 4 456 204

## Beschreibung

Die Erfindung betrifft eine Klimaanlage eines Verkehrsflugzeugs mit einem am Ausgang eines Stauluftkanals angeordneten Stauluftwärmetauscher und einem Staulufteinlass gemäß dem Oberbegriff des Anspruchs 1.

Bei Verkehrsflugzeugen umfassen die Klimaanlagen durch Stauluft gekühlte Haupt- oder Primärwärmetauscher, kurz als Stauluftwärmetauscher bezeichnet, die am Ausgang eines Stauluftkanals angeordnet sind, dessen offener Einlaufquerschnitt in die Außenkontur des Flugzeugs so mündet, dass die zum Kühlen dienende Luft unter dem Staudruck der Außenluft zugeführt wird. Bei luftgestützten Klimaanlagen von Flugzeugen wird die Kühlleistung durch Expansion von hochverdichteter Luft gewonnen, die von einem Triebwerk (Engine) oder einem Hilfstriebwerk (APU: Auxiliary Power Unit) abgegeben wird, welche auch als Prozessluft bezeichnet wird. Durch thermodynamische Vorgänge, welche unterschiedlich geschaltet werden können, wird die heiße Prozessluft verdichtet, expandiert und in wärmetauschender Weise fortbehandelt. Diese wärmetauschende Behandlung der Luft wird unter anderem mittels des besagten Stauluftwärmetauschers realisiert, wobei die kühlere Flugzeugumgebungsluft als Prozesspartner zur Kühlung der heißen Prozessluft verwendet wird. Diese kühlere Umgebungsluft wird über den oben genannten in die Außenkontur der Flugzeugstruktur eingelassenen Staulufteinlass (Ram Air Channel) und den sich diesem anschließenden Stauluftkanal einem Luftverteilungssystem zugeführt.

Bei den meisten bekannten Flugzeugtypen sind die Klimaanlagen im unteren Bereich des Flugzeugrumpfs eingebaut, die bei den Verkehrsflugzeugen der Airbus Produktpalette vom Typ A319, A320, A321, A330 und A340 im Bereich einer Bauch-Verkleidung des Flugzeugrumpfs, der sogenannten "Belly Fairing" positioniert sind.

Aufgrund dieser Positionierung der Klimaanlage(n) ist bei den vorgenannten Airbus Flugzeugen die Anordnung der Staulufteinlässe im unteren Rumpfbereich zu beobachten.

Bei der Positionierung der Staulufteinlässe (wie auch der Stauluftauslässe) muss besonders darauf geachtet werden, dass die physikalischen Randbedingungen, die auf einen Überdruck an Staulufteinlass und (möglichst) einen Unterdruck am Stauluftauslass abzielen, eingehalten werden, da ansonsten der aerodynamische Wirkungsgrad des gesamten Stauluftkanals beim Flug reduziert ist. Ein Einbau des Staulufteinlasses im "Belly Fairing"-Bereich, wie gegenwärtig bei allen Airbus Flugzeugen umgesetzt, ist zwar für die benötigte Kühlleistung ausreichend, ist jedoch nicht optimal aufgrund des von der "Belly Fairing" verursachten zusätzlichen Luftwiderstandes, und, wegen des Gewichts der großen Verbindungswege, auch nicht optimal für das Stauluftsystem, beispielsweise eines Großraum-Flugzeugs vom Typ Airbus A380. Zur Regelung des Stauluftmassenstroms, welcher zur Kühlung des oder der Stauluftwärmetauscher verwendet wird, sind meistens verstellbare Klappen am Ein- und Auslass eingebaut. Hinsichtlich der Ausführung der Klappen und deren zum Einsatz gebrachten Anzahl existieren eine Vielzahl von unterschiedlichen Architekturen. So ist bei der A320-Familie von Airbus Flugzeugen dem Staulufteinlass nur eine (einzelne) Einlassklappe integriert. Bei den Flugzeugen vom Typ A330 und A340 ist eine Einlassklappe und auch eine Auslassklappe zur Steuerung der Stauluft vorhanden.

Aus der EP-A-1 251 069 eine Flugzeugklimaanlage mit einem Stauluftkanal bekannt, der einen durch eine Einlassklappe verschließbaren EInlasskanal aufweist. Der Einlasskanal ist erkennbar so angeordnet, dass er unter einem spitzen Winkel geneigt in einem parallel zur Strömungsrichtung angeordneten Bereich der Flugzeugaußenhaut mündet, beispielsweise an der Unterseite einer unteren Flügelverkleidung bzw. einer "Belly Fairing", wie eingangs beschrieben. Die Einlassklappe ist durch eine erste und eine zweite Klappe bzw. durch ein erstes und ein zweites Klappensegment gebildet, von denen das erste KlAppensegment an der Flugzeugaußenhaut gelenkig gelagert ist und sich in den Einlasskanal erstreckt und das zweite Einlasssegment an seinem einen Ende gelenkig mit dem ersten Segment verbunden ist und an seinem anderen Ende zur Oberseite des Einlasskanals verläuft. Mittels eines Aktuators kann die Einlassklappe so betätigt werden, dass das erste Klappensegment die Einlassöffnung wahlweise verschließt, wobei es dann parallel zur Flugzeugaußenhaut und damit parallel zur Richtung der an dieser vorbeifließenden Strömung angeordnet ist oder in das Innere des Einlasskanals zurückgezogen wird und die Einlassöffnung freigibt. In der geöffneten Stellung der Einlassklappe nehmen das erste Klappensegment und das zweite Klappensegment eine im wesentlichen gestreckte Konfiguration an, welche fast parallel zur oberen Wand des Einlasskanals ist, Aufgrund der-schrägen Anordnung des Einlasskanals, bei welcher der Einlasskanal im spitzen Winkel zur Flugzeugaußenhaut angeordnet ist, genügt eine verhältnismäßig kleine Winkelbewegung des ersten Klappensegments, um die Einlassöffnung zu öffnen oder zu schließen. Das erste Klappensegment ist in Form einer ebenen Fläche ausgebildet, welche die in diesem Bereich ebenfalls ebene Flugzeugaußenhaut in der vorher besagten Weise ergänzt. Aus der FR-A-1 055 264 ist ein Düsenflugzeug bekannt, welches zusätzlich zu einer Anzahl von primären Triebwerken mehrere Hilfstriebwerke aufweisen soll, welche im Falle des Versagens von Haupttriebwerken in Betrieb genommen werden sollen. Bei einer der dort beschriebenen Ausführungsformen ist als Einlass für das Hilfstriebwerk ein Staulufteinlass vorgesehen, der an der Flügelvorderkante des Tragflügels einen Einlaufquerschnitt aufweist, welcher mittels einer Klappenanordnung wahlweise geöffnet oder geschlossen werden kann. Diese Klappenanordnung kann gemäß unterschiedlichen Ausführungsbeispielen wahlweise durch eine einzige, an einem Hebel gelagerte Einlassklappe oder durch zwei Einlassklappen, die mit einem Ende in der vorderen Verlängerung der Oberseite und der Unterseite des Tragflügelprofils gelagert sind, gebildet sein. Alternativ können auch ein einzelner oder ein in Form von zwei Hälften vorgesehener Verschlusskörper vorgesehen sein, welcher mittels einer Betätigungseinrichtung so verschiebbar ist, dass er den an der Flügelvorderkante befindlichen Einlaufquerschnitt wahlweise freigibt oder verschließt. Bei Betrieb der Hilfstriebwerke soll der Einlaufquerschnitt freigegeben werden, sonst soll er verschlossen sein. Schließlich ist aus der US-A-3 347 496 ein überschall-Senkrechtstart-Flugzeug bekannt, welches zu seinem Antrieb zwei jeweils an der Seite des Flugzeugrumpfs angeordnete Düsentriebwerke aufweist. Vor den Düsentriebwerken befindet sich jeweils ein Lufteinlasskanal, welcher eine nach vorne geöffnete Haupteinlassöffnung aufweist, die zur Zuführung von Luft zu den Triebwerken beim normalen Flugbetrieb vorgesehen ist. Weiterhin sind an der Oberseite des Einlasskanals zusätzliche Einlassöffnungen vorgesehen, die zur Zuführung von Luft zu den Triebwerken bei Senkrechtstart oder -landung vorgesehen sind. An der Oberseite des Einlasskanals ist eine Klappenanordnung vorgesehen, die wahlweise die vordere Einlassöffnung oder die obere Einlassöffnung freigibt. Beim normalen Flugbetrieb Ist die vordere Einlassöffnung freigegeben und die obere Einlassöffnung verschlossen, bei Senkrechtstart oder -landung ist umgekehrt die vordere Einlassöffnung verschlossen und die obere Einlassöffnung freigegeben, wodurch verhindert werden soll, dass aufgewirbelter Staub oder andere Teilchen durch die Triebwerke angesaugt werden können. Die Klappenanordnung umfasst ein vorderes Klappensegment und ein hinteres Klappensegment, von denen das vordere Klappensegment am vorderen Ende an der Oberseite des Einlasskanals gelenkig gelagert ist. Das hintere Ende des vorderen Klappensegments ist mittels eines Gelenks mit dem vorderen Ende des hinteren Klappensegments verbunden und das hintere Ende des hinteren Klappensegments ist in einer Schiene oder Kulisse verschieblich gelagert. Im geöffneten Zustand des Einlasskanals sind die beiden Segmente der Klappenanordnung in einer gestreckten Konfiguration an der Oberseite des Einlasskanals befindlich, wobei das hintere Klappensegment die obere Einlassöffnung verschließt. Im geschlossenen Zustand der vorderen Einlassöffnung sind die beiden Klappensegmente so weit gegeneinander abgewinkelt, dass das vordere Klappensegment die vordere Einlassöffnung verschließt und das hintere Klappensegment von der oberen Einlassöffnung zurückgezogen ist und diese freigibt. Eine zusätzlich an der Oberseite außen auf dem Einlasskanal vorgesehene Einlaßklappe dient als äußerer Verschluß und zur Steuerung des in den Einlaßkanal über die obere Einlaßöffnung zugeführten Luftstroms. Außerdem ist aus der US-A-2 327 737 eine im Tragflügel eines Flugzeugs untergebrachte Einrichtung bekannt, welche dazu dient, Luftdruck und -temperatur im Inneren eines in großer Höhe fliegenden Flugzeugs unter Bedingungen zu halten, die nicht unangenehm sind. Dazu enthält die Einrichtung einen Lader, welcher in einem von der Flügelvorderkante des Tragflügels zum Inneren der Kabine führenden Luftversorgungskanal geschaltet ist, durch welchen an der Flügelvorderkante des Flugzeugs aus der Umgebung aufgenommene Luft komprimiert und mit einem dem Bodenluftdruck ähnlichen Druck in das innere der Kabine gepreßt wird. Im Kanal zwischen dem Lader und dem Kabineninneren sind zwei Wärmetauscher vorgesehen, welche dazu dienen, die von dem besagten Lader komprimierte Luft wahlweise zu kühlen bzw. zu erwärmen. Ein erster Wärmetauscher von diesen ist in einem Stauluftkanal angeordnet, welcher von einer weiteren an der Flügelvorderkante mündenden Einlaßöffnung zur Rückseite des Flügels führt, und dient dazu, die über den Lader zugeführte Luft bedarfsweise, zu kühlen. Die Kühlleistung wird geregelt mittels einer Drosselklappe, die im Stauluftkanal zwischen der Einlaßöffnung und dem Kühler angeordnet ist. Ein weiterer Wärmetauscher ist über einen ein wärmetransportierendes Fluid führenden Kreislauf mit einem Motor des Flugzeugs gekoppelt, so dass die von dem Lader in die Kabine geförderte Luft bedarfsweise auch erwärmt werden kann. Die Wärmezufuhr wird mittels eines Ventils gesteuert, das in dem besagten Kreislauf zwischen Motor und Wärmetauscher vorgesehen ist. Die bekannte Einrichtung, die darauf ausgerichtet ist, die Bedingungen in einem offensichtlich kleinen, zum Fliegen in großer Höhe vorgesehenen Flugzeug mit Entwicklungsstand von 1941 erträglich zu machen, soll hauptsächlich relativ einfach, kompakt, wirkungsvoll und leichtgewichtig sein. '

Die Aufgabe der Erfindung ist es, eine Klimaanlage für ein modernes Verkehrsflugzeug zu schaffen, welche in Bezug auf Strömungswiderstand, Gewicht und Wirkungsgrad günstig angeordnet ist und deren Staulufteinlaß sowohl im geschlossenen als auch im teilweise oder vollständig geöffneten Zustand eine möglichst geringe Erhöhung des aerodynamischen Gesamtwiderstands des Flugzeugs bewirkt.

Diese Aufgabe wird durch eine Klimaanlage mit den in Anspruch 1 angegebenen Merkmalen gelöst. Vorteilhafte Ausführungsformen und Weiterbildungen der erfindungsgemäßen Klimaanlage sind in den Unteransprüchen angegeben.

Durch die Anordnung des Stauluftwärmetauschers im Wurzelbereich des Tragflügels und die Anordnung des Einlaufquerschnitts des Stauluftkanals an der Flügelvorderkante des Tragflügels ergeben sich in vorteilhafter Weise eine optimale Ausnutzung des Staudrucks der Außenluft bei gleichzeitig geringem Widerstand sowohl in Bezug auf die Anordnung und Verkleidung der Klimaanlage bzw. des Stauluftwärmetauschers derselben und des Staulufteinlasses verbunden mit einer Gewichtsersparnis durch kürzere Verbindungswege. Durch eine variable Veränderung des Einlaufquerschnitts der angestauten Außenluft besteht die Möglichkeit einer Steigerung des Massendurchsatzes und einer damit korrelierten Erhöhung der Kühlleistung im Stauluftwärmetauscher.

Die Erfindung ist in einem Ausführungsbeispiel anhand der beigefügten Zeichnungen näher erläutert.
Es zeigen
- Fig. 1: die Querschnittsansicht eines offenen Staulufteinlasses eines Flugzeuges mit einer Darstellung der Klappenbewegungsmechanik einer aus zwei Klappen integrierten Staulufteinlassklappe, der an einer Vorderflügelkante eines Tragflügels eingebaut ist;
- Fig. 2: die Ansicht nach der Fig. 1 mit einem Staulufteinlass, dessen Kanaleinlauf durch eine vordere Staulufteinlassklappe, die dem Kanaleinlauf nahe und drehbeweglich gelagert ist, verschlossen ist;
- Fig. 3: die Ansicht nach der Fig. 1 mit einem Staulufteinlass, dessen Kanaleinlauf teilweise durch die vordere Staulufteinlassklappe nach der Fig. 2 freigegeben ist;
- Fig. 4: die Ansicht nach der Fig. 2 mit einem Staulufteinlass, der eingangs des Kanaleinlaufs am Kanalboden strukturell verstärkt ist;
- Fig. 5: die Ansicht nach der Fig. 4 mit einem Staulufteinlass, die mit Darstellung einer hebelerweiterten Staulufteinlassklappe, die im Inneren eines tragflügelintegrierten Stauluftkanals drehbeweglich gelagert angeordnet ist, erweitert ist;
- Fig. 6: die Ansicht nach der Fig. 4 mit einem Staulufteinlass, die mit der Darstellung einer modifizierten Ausführung der Klappenbewegungsmechanik der Staulufteinlassklappe erweitert wird.

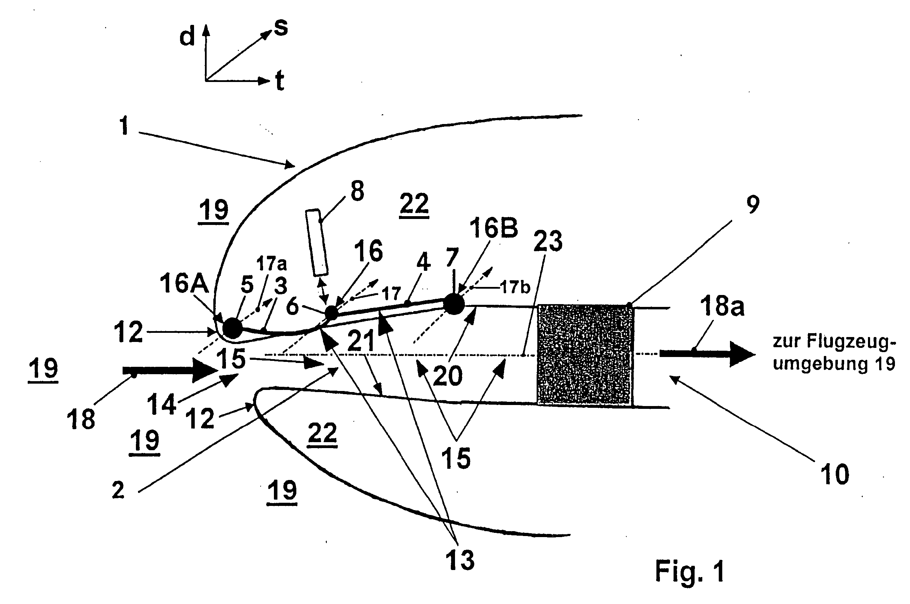

In den Figuren 1 bis 6 wird nun der Staulufteinlass gezeigt, den man an einer Flügelvorderkante 12 eines Tragflügels 1 von einem Verkehrsflugzeug eingelassen wird. Diese Position wird deswegen gewählt, da die flugzeugumgebende Luftströmung der flügelnahen Umgebungsluft (Außenluft) während des Fluges an der Vorderkante des Tragflügels 1 im Bereich der Nasenkrümmung des Tragflügel-Profils den maximalen Staudruck entwickeln wird. Der Fachmann spricht dann von einer Platzierung des Staulufteinlasses im (optimalen) Staupunkt der Flügelvorderkante. Nun wären natürlich auch anderer Bereiche des Flugzeuges, die der ankommenden Luftströmung der (das Flugzeug umgebenden) Außenluft während (bspw. schon der Bewegung des bodenhaftenden Flugzeuges oder während) des Fluges denkbar, sofern auf deren in Flugrichtung angeordnete und luftangeströmte Oberfläche ein ausreichend hoher Staudruck der Außenluft lastet, deren niedrige Lufttemperatur zur Kühlung von flugzeugintern installierten Anlagen oder Einrichtungen oder Teilen davon geeignet ist, nur sollten letztere nahe genug diesen Bereichen, die einem optimalen Staudruck der Außenluft ausgesetzt sind, platziert sein. Diese Situation wird nicht immer gegeben sein, von daher sah sich die Fachwelt bisher auch nicht veranlasst, über derartige Situationen nachzudenken, weil jener Raum nicht zur Verfügung stand. Erst mit dem beabsichtigten Bau eines Großraumflugzeuges, beispielsweise während der Entwicklung und Konstruktion eines Verkehrsflugzeuges vom Typ: Airbus "A380", gewannen derartige Gedanken an Realität, wobei der Wunsch nach Erhöhung der Kühlleistung durch eine Steigerung der bereitzustellenden Menge an Gesamtkühlmassenstrom (Stauluft) bei einer gleichermaßen stattfindenden Reduzierung der Länge(n) eines den Kühlmassenstrom transportierenden Luftkanals, die von einer nicht zu vernachlässigenden Reduzierung an Eigengewicht des Flugzeuges begleitet wird, genug Anreiz bieten wird, nach einer vorteilhaften Lösung für einen Staulufteinlass suchen, der außerdem keinesfalls den aerodynamischen Gesamtwiderstandes des Flugzeuges beeinträchtigen darf.

Die anhand der Figuren 1 bis (3) 4 und 5 sowie 6 vorgestellten Lösungen für einen Staulufteinlass werden den vorher genannten Aspekten gerecht werden.

Allgemein besteht der Staulufteinlass (nach jenen Figuren) aus einem Stauluftkanal 2, der einen Kanaleinlauf mit einem offenen Einlaufquerschnitt 14 aufweist. Dieser Kanaleinlauf ist (aus den vorbeschriebenen Gründen) an der Flügelvorderkante eines Tragflügels 1 (einer Tragflügelhälfte) in die Außenkontur einer Tragflügel-Struktur 22 eingelassen, wobei der Stauluftkanal 2 von dort aus mit einem offenen Kanalquerschnitt 15 über die Kanallänge fortgesetzt ist. Dieser Kanaleinlauf ist im maximalen Staupunkt der den Tragflügel 1 anströmenden Luftströmung der erwähnten Außenluft angeodnet.

Der Stauluftkanal 2 wird beispielsweise einem weitestgehend quaderähnlichen Körper ähneln, dessen Grundfläche dem Kanalboden 21 und dessen Deckfläche der Kanaldecke 20 vergleichbar ist, wobei diese beiden Quaderflächen in Richtung einer (der Flugzeug-Hochachse äquivalent gelegenen) Tragflügel-Hochachse d zueinander beabstandet angeordnet sind, die ggf. einen nahe dem Kanalausgang liegenden Knick aufweisen, der sich in Richtung der Tragflügel-Spannweite s erstreckt, wobei die durch den Knick einander zuneigenden Flächenteile dieser Quaderflächen sich bis an den Kanaleinlauf respektive an die einsetzende Wölbung des Tragflügels 1 erstrecken, die in diesem Bereich neben den (der Knickgestalt der Grund- und Deckfläche des quaderähnlichen Körpers angepassten) Seitenflächen des quaderähnlichen Körpers, die Seitenflächen des Stauluftkanals 2 vergleichbar sind, den offenen Einlaufquerschnitt 14 eingrenzen.

Der Stauluftkanal 2 ist beispielgemäß nach dem Vorbild der Fig. 1 entlang einer Profilsehne 23 des Tragflügelprofils in Richtung der Tragflügel-Tiefe t verlaufend angeordnet, wobei dessen parallel oder annähern parallel ausgeführte (also: ggf. leicht zur Kanaldecke 20 oder zum Kanalboden 21 des Stauluftkanals 2 abgeschrägt ausgeführte) Anordnung zur Profilsehne 23 ebenfalls denkbar wäre. Zu den weiteren Bestandteilen dieses Stauluftkanals 2 zählen eine (wie auch immer ausgeführte) Staulufteinlassklappe 13, ein (als eine Antriebseinheit eingesetzter) Aktuator 8 und eine (nicht extra bezifferte) geeignete mechanische Übertragungs-Einheit, welche die vom Aktuator 8 mechanisch übertragene Zwangsbewegung auf eine ihr integrierte Klappenbewegungsmechanik mechanisch aufnehmen wird, die danach mechanisch auf die Staulufteinlassklappe 13 zur Umsetzung einer schließenden Klappenbewegung durch vertikal und entlang der Profilsehne 23 (über die Tragflügel-Tiefe t) ausgeführtes Klappenschenken aus einer (i. d. R. an einer Kanaldecke 20 befindlichen oder die Kanaldecke 20 bildenden) Ausgangsposition übertragen wird. Dabei wird ein (nahezu dichtes) Verschließen des offenen Einlaufquerschnittes 14 eingangs des Kanaleinlaufs mit der Staulufteinlassklappe 13 umgesetzt, wobei die Staulufteinlassklappe 13 dann fest in dieser Schließstellung verharren wird. Dabei wird eine nach außen konkav gewölbte Klappenoberfläche (Klappenkontur) der Staulufteinlassklappe 13 einer gewölbten Tragflügeloberfläche (Tragflügelkontur) des Tragflügels 1 angepasst sein, um aerodynamische Widerstandsverluste zu vermeiden bzw. diese Verluste auf ein vernachlässigbares Minimum einzuschränken.

Erst durch eine weitere Bewegungsübertragung des Aktuators 8 auf die Klappenbewegungsmechanik dieser Übertragungs-Einheit, die eine (der schließenden Klappenbewegung) entgegengerichtete Bewegung der Staulufteinlassklappe 13 umsetzen wird, lässt sich diese Staulufteinlassklappe 13 aus dieser verharrenden (und den Einlaufquerschnitt 14 verschließenden) Klappenstellung dem Einlaufquerschnitt 14 entfernen, d. h., der Einlaufquerschnitt 14 wird durch die öffnende Klappenbewegung der Staulufteinlassklappe 13 - je nach Dauer der Zwangsrückführung der Staulufteinlassklappe 13 und deren lokal bezogenen (eingenommenen) Lage und Stellung innerhalb des offenen Stauluftkanals 2 - vollständig oder teilweise freigegeben. Anderenfalls lässt sich die Staulufteinlassklappe 13 in ihre Ausgangsposition zurückführen, in der letztere, wie vorher angedeutet, beispielsweise nahegelegen an einer Kanaldecke 20 des Stauluftkanals 2 geführt wird oder mit ihrer gestreckten Klappenlänge (innerhalb diesem Kanalbereich) selbst diese Kanaldecke 20 bildet.

Letztere Position würde eine ungehinderte Freigabe des offenen Kanalquerschnittes 15 bedeuten, wodurch die Möglichkeit bestehen wird, dass in dieser gewollten Situation eine von außerhalb dem Tragflügel 1 eingangs des Staulufteinlasses angestaute Außenluft den Stauluftkanal 2 als Stauluft 18 ungehindert passieren und einen ausgangs des Stauluftkanals 2 angeordneten Stauluftwärmetauscher 9 (Haupt- oder Primärtauscher) erreichen und letzteren zum Zwecke der Kühlung umspülen wird.

Nach geschehener Luftkühlung des Stauluftwärmetauschers 9 wird eine abströmende Stauluft 18a als Abluft in einen Auslasskanal 10, der dem Stauluftwärmetauscher 9 nachgeordnet ist, geleitet, wobei diese Stauluft 18a nach geschehenem Passieren des Auslasskanals 10 ausgangs letzteren an die nähere Flugzeugumgebung 19 (Tragflügelumgebung) abgegeben wird. Soweit sind alle Ausführungsformen dieses Ausführungsbeispiels mit dieser Konfiguration befasst.

Zurückkommend auf eine (möglicherweise bevorzugte) Ausführungsform der Klappenbewegungsmechanik der (unbezifferten) Übertragungseinheit, die eine vordere und eine hintere Staulufteinlassklappe 3, 4 und mehrere verschiedenartige Lager 16, 16A, 16B umfasst, denen die beiden Staulufteinlassklappen 3, 4 drehbeweglich gelagert sind, wird nachfolgend deren Aufbau und die Klappenbewegungsmechanik beider Staulufteinlassklappen 3, 4 näher beschrieben, die mit einem Blick auf die Figuren 1 bis 3 verständlich wird.

Aus der Fig. 1 wird nunmehr die Anordnung der vorderen und hinteren Staulufteinlassklappe 3, 4 ersichtlich, deren Zusammenschluss mittels der erwähnten Lager 16, 16A, 168, an denen die beiden Klappen drehbeweglich befestigt sind, die Bildung (respektive die Integration zu) einer (allgemein bezeichneten) Staulufteinlassklappe 13 ermöglicht. Dabei ist die vordere Staulufteinlassklappe 3 konkav gewölbt ausgebildet, die (aus Sicht der Ausgangslage der Klappen betrachtet) zum Kanalboden 21 gewölbt ausgeführt und (mit einem Vorgriff auf spätere Ausführungen) der gewölbten Tragflügelkontur (respektive der gekrümmten Nasenform des Tragflügels 1) angepasst ist. Die hintere Staulufteinlassklappe 4 ist ebenflächig (nicht gewölbt) ausgebildet.

Die Klappenlängen dieser beiden Staulufteinlassklappen 3, 4 weichen (aus der Sicht ihrer Ausgangslage betrachtet) voneinander ab, wobei die gestreckte Klappenlänge der vorderen Staulufteinlassklappe 3 beispielsweise kleiner (oder bestenfalls gleich) der gestreckten Klappenlänge der hinteren Staulufteinlassklappe 4 ist.

Diese beiden Staulufteinlassklappen 3, 4 sind in Richtung der Tragflügeltiefe t gelegen und hintereinander angeordnet, deren Ausgangslage entweder (unter Ausnutzung der kanaldeckennahen Freiräume der Tragflügel-Struktur 22) oberhalb und nahe der Kanaldecke 20 und außerhalb des Stauluftkanals 2 gelegen ist. Anderenfalls korrespondiert deren Ausgangslage mit einer Klappenanordnung, die einer Abbildung der Klappenlage der vorderen und hinteren Staulufteinlassklappe 3, 4 in Richtung der Tragflügel-Tiefe t entsprechen wird, nach welcher die Kanaldecke 20 (zumindest teilflächig) durch diese beiden Klappen gebildet ist. Sofern eine Klappenlage der vorderen und hinteren Staulufteinlassklappe 3, 4 außerhalb des Stauluftkanals 2 erwogen wird, ist die Kanaldecke 20 von einer Aussparung durchbrochen, welche einen definierten Flächenbereich der Kanaldecke 20 öffnet (freigibt). Es ist vorgesehen, dass durch diesen offenen Flächenbereich die beiden drehbeweglich gelagerten Staulufteinlassklappen 3, 4 ungehindert abgesenkt werden können, worauf noch später eingegangen wird.

Die Drehbeweglichkeit der vorderen und hinteren Staulufteinlassklappe 3, 4 ist (nach dem Vorbild der Fig. 1) durch ein erstes Lager 16A, ein zweites Lager 16B und ein drittes Lager 16 realisiert. Das dritte Lager 16 ist ein Loslager, dem beide Klappen (resp. jeweils ein Ende der Klappen) drehbeweglich befestigt ist. Das erste Lager 16A ist ein Festlager, das nahe dem Einlaufquerschnitt 14 (ggf. außer halb des Stauluftkanals 2) angeordnet und (die beschriebene Ausgangslage der beiden Staulufteinlassklappen 3, 4 vorausgesetzt) dem dritten Lager 16 (in Richtung der Profilsehne 23 des Tragflügels 1 betrachtet) im Abstand angeordnet ist, dem ein Ende der vorderen Staulufteinlassklappe 3 drehbeweglich befestigt ist. Das zweite Lager 16B ist (nach dem Vorbild der Fig. 1) ein Loslager, das dem Kanalausgang im Abstand (ggf. auch außerhalb des Stauluftkanals 2) angeordnet und (die beschriebene Ausgangslage der beiden Staulufteinlassklappen 3, 4 vorausgesetzt) ebenfalls dem dritten Lager 16 (in Richtung der Profilsehne 23 des Tragflügels 1 betrachtet) im Abstand angeordnet ist, dem ein Ende der hinteren Staulufteinlassklappe 4 drehbeweglich befestigt ist. Es bleibt zu erwähnen, dass die (verbleibenden) beiden anderen Enden der vorderen und hinteren Staulufteinlassklappe 3, 4 drehbeweglich dem dritten Lager 16 befestigt sind. Das dritte Lager 16 ist demnach zwischen dem ersten und dem zweiten Lager 16A, 16B positioniert.

Auf die Klappenbewegungsmechanik näher eingehend wird diesen Angaben hinzugefügt, dass die vordere Staulufteinlassklappe 3 einseitig am als Festlager ausgebildeten ersten Lager 16A befestigt und um einen ersten Drehpunkt 5 drehbeweglich (schwenkbar) gelagert ist, der auf einer ersten Lagerachse 17a dieses Festlagers angeordnet ist.

Dem wird hinzugefügt, dass die hintere Staulufteinlassklappe 4 einseitig am als Loslager ausgebildeten zweiten Lager 16B befestigt und um einen zweiten Drehpunkt 7 drehbeweglich (schwenkbar) gelagert ist, der auf einer längsaxial veränderbaren zweiten Lagerachse 17b dieses Loslagers angeordnet ist. Außerdem ist die vordere und die hintere Staulufteinlassklappe 3, 4 am als Loslager ausgebildeten dritten Lager 16 befestigt und um einen dritten Drehpunkt 6 drehbeweglich (schwenkbar) gelagert, der auf einer längs- und / oder queraxial veränderbaren dritten Lagerachse 17 des Loslagers angeordnet ist.

Damit eine positionsveränderliche Klappenbewegung der vorderen und der hinteren Staulufteinlassklappe 3, 4 sich umsetzen lässt, ist das als Festlager ausgebildete erste Lager 16A ortsfest an der Tragflügel-Struktur 22 und das als Loslager ausgebildete zweite Lager 16B ortsveränderlich angeordnet, wobei die Position des zweiten Lagers 16B mit einer entlang der Tragflügel-Tiefe t stattfindenden Bewegungsrichtung veränderbar ausgeführt ist. Dabei ist denkbar, dass das als Loslager ausgebildete zweite Lager 16B ein Axiallager ist, das schienenbeweglich angeordnet ist. Die zur Zwangsführung des Loslagers angeordnete(n) Laufschiene(n), denen das zweite Lager 16B (schienen)beweglich und nicht verlierbar befestigt ist, ließen sich an der Tragflügel-Struktur 22 in Richtung der Tragflügel-Tiefe t ortsfest installieren, wobei die Schienenführung der einzelnen Laufschiene zum Kanalboden 21 gerichtet ist.

Wie eingangs des Ausführungsbeispiels angedeutet, die Zwangsbewegung der eben vorgestellten Klappenbewegungsmechanik, die der erwähnten mechanischen Übertragungseinheit integriert ist, wird mit einem Aktuator 8 realisiert, welcher beispielsweise (nach der Fig. 1) oberhalb der Kanaldecke 20 und oberhalb dieser Klappenbewegungsmechanik im Bereich der Tragflügel-Struktur 22 angeordnet ist. Der Aufbau und der Anschluss des Aktuators 8 an eine Energiequelle, deren zugeführte Energie von einem Aktuatorantrieb in eine Aktuatorbewegung gewandelt wird, wird nicht näher betrachtet, da diese nicht Bestandteil der Erfindung sind. Es wird nur soweit ausgeführt, dass die vom Aktuator 8 bereitgestellte (abgegebene) und auf die Klappenbewegungsmechanik übertragene mechanische Energie beispielsweise mit einem als Aktuatorantrieb eingesetzten elektrisch betriebenen Schrittmotor, der beispielsweise stufenlos regelbar ausgeführt ist, denkbar wäre, dessen abgegebene mechanische Energie an der Motorwelle bereitgestellt wird. Anderenfalls wäre ein Aktuator 8, der eine pneumatische oder hydraulische Energie aufnehmen wird und in eine ausgangsseitig mechanisch bereitgestellte Energieform wandelt, die ein Aktuatorantrieb übertragen wird, ebenfalls denkbar. Wie dem auch sein wird, nach dem Vorbild der Fig. 1 berücksichtigt die Lösung ein Gestänge, das dem Aktuatorantrieb und dem als Loslager ausgebildeten dritten Lager 16 mechanisch gekoppelt ist. Dabei könnte beispielsweise die Wellenleistung der Motorwelle des Schrittmotors über eine geeignete (mechanische) Verbindung, beispielsweise über ein geeignetes Getriebe, auf das Gestänge übertragen werden. Andererseits wird davon ausgegangen, dass der Aktuatorantrieb (nach der pfeilartigen Richtungsangabe in der Fig. 1) eine gradlinig ausgeführte Aktuatorbewegung auf das Loslager des dritten Lagers 16 übertragen wird, die wechselweise (je nach gewünschter Bewegungsrichtung der beiden Staulufteinlassklappen 3, 4) eine (auf das als Loslager ausgebildete dritte Lager 16) ausgeübte Druck- oder Zugbewegung ist.

Sofern eine derartige mechanische Verbindung zwischen dem Aktuatorantrieb und dem Loslager des dritten Lagers 16 besteht, wird die Druck- oder Zugbewegung auf diese Loslager übertragen, wodurch eine zum Kanalboden 21 und gleichfalls zum Einlaufquerschnitt 14 gerichtete Klappenbewegung der vorderen Staulufteinlassklappe 3 und eine zum Kanalboden 21 geneigte Senkbewegung der hinteren Staulufteinlassklappe 4 realisiert wird oder umgekehrt. Dabei wird das schienengeführte zweite Lager 16B seine Ausgangsposition verlassen sich dem Kanaleinlauf nähern. Währenddessen sich das dritte Lager 16 (das Loslager) infolge der aufgenommenen Druckkraft sowohl quer zur als auch längs der Profilsehnen-Richtung bewegen wird und sich dabei dem Kanalboden 21 nähern wird, werden die (am dritten Lager 16 drehbeweglich gelagerten und diesem befestigten) anderen Enden der vorderen und hinteren Staulufteinlassklappe 3, 4 zum Kanalboden 21 bewegt, wodurch eine synchrone Klappenbewegung umgesetzt wird. Sofern nun das dritte Lager 16 infolge der aufgenommenen Zugkraft in umgekehrter Situation sich dem Kanalboden 21 entfernen wird, werden die (am dritten Lager 16 drehbeweglich gelagerten und diesem befestigten) anderen Enden der vorderen und hinteren Staulufteinlassklappe 3, 4 sich dem Kanalboden 21 entfernen, wodurch eine synchrone rückführende Klappenbewegung der vorderen und hinteren Staulufteinlassklappe 3, 4 bis in ihre Ausgangslage möglich wird, die (aus gewünschten Gründen der nur stattfindenden Querschnittsverengung des Einlaufquerschnittes 14, worauf noch eingegangen wird,) möglicherweise nicht gewünscht wird.

Auch der Vollständigkeit wegen wird ergänzt, dass es vorgesehen ist, den Stauluftkanal 2 massiv auszuführen, der aus einem geeigneten Metall bestehend wird. Sofern nicht vorgesehen ist, dass die vordere und die hintere Staulufteinlassklappe 3, 4 (nach einer der beiden angegebenen Ausgangslagen) einen Teilbereich der Kanaldecke 20 bilden, ist (wie vorher angedeutet) gemäß dieser Annahme der (massiv resp. metallen ausgeführten) Kanaldecke 20 wenigstens eine Aussparung, welche einen definierten Flächenbereich der Kanaldecke 20 öffnet, ausgenommen. Durch diese Ausnehmung wird dann gewährleistet, dass eine ungehinderte Durchführung des als Loslagers ausgebildeten dritten Lagers 16 und der diesem Loslager drehbeweglich befestigten vorderen und hinteren Staulufteinlassklappe 3, 4 gewährleistet wird.

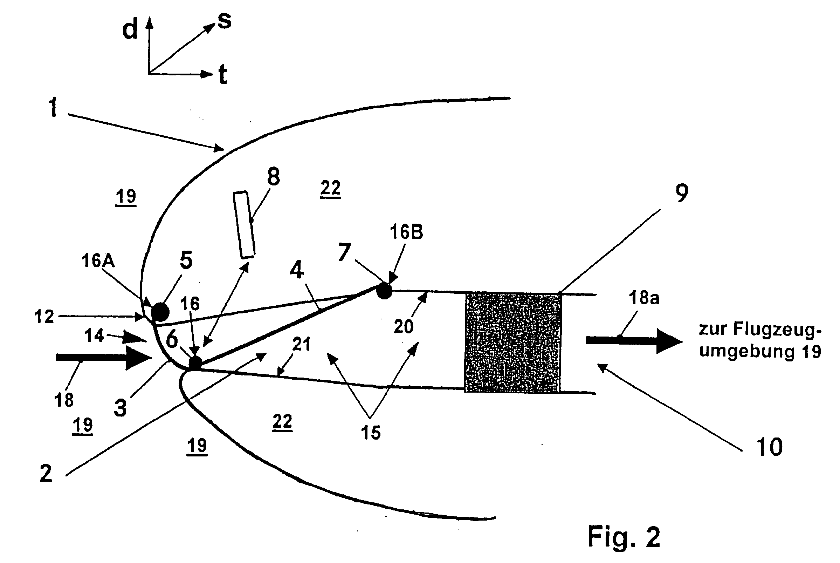

Auch ist ausgangs des Stauluftkanals 2 der (erwähnte) Stauluftwärmetauscher 9 angeordnet, wobei die am Einlaufquerschnitt 14 einströmende Stauluft 18 der flügelnahen Flugzeugumgebung 19 während des Fluges durch das Kanalinnere strömen und den Stauluftwärmetauscher 9 erreichen und kühlen wird, sofern der Einlaufquerschnitt 14 nicht durch die vordere Staulufteinlassklappe 3 (gemäß den Erläuterungen hinsichtlich der Fig. 2) verschlossen ist. Letztere Maßnahme ist solchermaßen gewünscht, die sich mit der beschriebenen Klappenbewegungsmechanik vorteilhaft umsetzen lässt.

Im weiteren Verlauf wird die Stauluft 18 nach geschehener Umströmung des Stauluftwärmetauschers 19 als Abluft 18a an einen Auslasskanal 10 abgegeben, der dem Stauluftwärmetauscher 9 verbunden ist. Diese Abluft 18a wird durch den Auslasskanal 10 geführt und ausgangs letzterem an die Flugzeugumgebung 19 abgegeben.

Nicht unerwähnt soll bleiben, dass anstelle dem Aktuator 8 alternativ eine vorgespannte Feder mit definierter Steifigkeit angeordnet werden kann, die aufgrund des Staudruckes der durch die Flugzeugbewegung auf dem Kanaleinlauf lastenden Stauluft 18 geregelt wird. Diese Feder wird eine Druckfeder sein, die mit einem Ende an der Tragflügel-Struktur 22 befestigt ist, wobei deren anderes Ende den Federdruck auf das als Loslager ausgebildeten dritten Lager 16 übertragen wird. Aus Gründen der Zuverlässigkeit kann erwogen werden, dass diese alternativ verwendete Feder dem Aktuator 8 parallel geschalten ist.

In der Fig. 2 wird man dem gleichen Aufbau des Staulufteinlasses, der in der Fig. 1 dargestellt und vorher erläutert wird, begegnen. Diese Darstellung unterscheidet sich (im Vergleich der Fig. 1) nur dadurch, dass die vordere Staulufteinlassklappe 3 in einer den (zeitabschnittsweise während des Fluges) offen gehaltenen Einlaufquerschnitt 14 des Kanaleinlaufs nunmehr letzteren verschlossen gehaltenen Klappenposition gezeigt wird. Insofern befindet sich die hintere Staulufteinlassklappe 4 durch die (beschriebene) Zwangsbewegung des dritten Lagers 16 (Loslagers) in einer zum Kanalboden 20 geneigten (abgeklappten) Position. Aufgreifend den Gedanken der Zwangsabsenkung wird das dritte Lager 16 bis auf den Kanalboden 20 abgesenkt und in eine dem (jetzt klappenverschlossenen) Einlaufquerschnitt 14 des Kanaleinlaufs nahe der Tragflügel-Außenkontur gelegene Position geführt. Für die in dieser Schließstellung verharrenden vorderen Staulufteinlassklappe 3 ist es aus aerodynamischen Gründen bedeutsam, dass die Klappenkontur der konkav gewölbten vorderen Staulufteinlassklappe 3 nach außen gewölbt ist. Dabei ist die Klappenform jener Klappe exakt der Tragflügelkontur im Bereich der Flügelvorderkante 12 angepasst ausgebildet, wodurch im klappenverschlossenen Zustand des Einlaufquerschnittes 14 ein (mit der nach außen gewölbten Klappenoberfläche der vorderen Staulufteinlassklappe 3 gebildeter) Oberflächenbereich der Flügelvorderkante 12 dermaßen gestaltet wird, dass keine (oder eine nur unwesentliche) Erhöhung des Flugzeuggesamtwiderstandes auftreten wird und (möglicherweise in Korrelation) entsprechend auftretende (aber ungewünschte) Ablöseerscheinungen einer den Tragflügel 1 umgebenden Luftströmung (der den Tragflügel umgebenden Außenluft) verhindert werden, die wenigstens deutlich minimieren werden. Dabei ist die vordere Staulufteinlassklappe 3 mit einem wirksamen Klappenflächenbereich ausgestattet ist, welcher nahezu der Außenkontur des Tragflügels 1 angepasst und der umfänglichen Form des Einlaufquerschnittes 14 eingepasst ist, mit dem das Verschließen des Einlaufquerschnitts 14 passgenau umgesetzt wird. In diesem Zusammenhang bleibt zu erwähnen, dass die drehbewegliche Lagerung der vorderen StaUlufteinlassklappe 3 um den ersten und zweiten Drehpunkt 5, 6 auf die Umsetzung einer konturengetreuen Nachbildung der Tragflügelkontur mit der vorderen Stauluftklappe (3) abgestimmt ist.

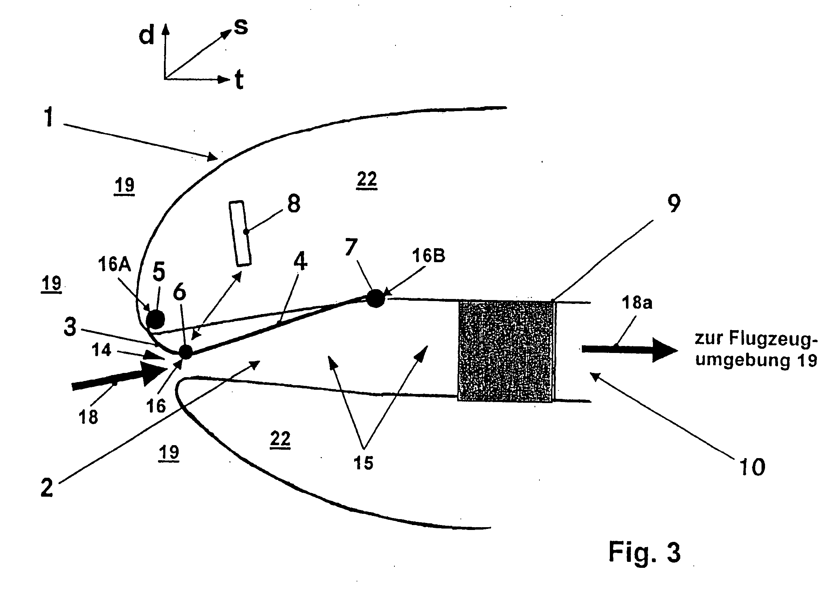

Auch in der Fig. 3 wird man dem gleichen Aufbau des Staulufteinlasses, der in der Fig. 1 dargestellt und vorher erläutert wird, begegnen. Diese Darstellung unterscheidet sich (im Vergleich der Fig. 1) nur dadurch, dass die vordere Staulufteinlassklappe 3 in einer den (zeitabschnittsweise während des Fluges) total offen gehaltenen Einlaufquerschnitt 14 des Kanaleinlaufs nunmehr letzteren teilweise öffnenden und verharrenden Klappenposition gezeigt wird.

Insofern befindet sich (auch in dieser - der Fig. 2 ähnelnden - Situation) die hintere Staulufteinlassklappe 4 durch die (beschriebene) Zwangsbewegung des dritten Lagers 16 (Loslagers) in einer zum Kanalboden 20 geneigten (abgesenkten) Position.

Hinsichtlich der zwangsgeführten Rückführung der vorderen und hinteren Staulufteinlassklappe 3, 4 bis in ihre Ausgangslage und der dabei synchron ablaufenden Klappenbewegung wurde bereits am Beispiel der Fig. 1 ausgeführt. Diese Zwangsführung der beiden Klappen lässt sich auch mittels der angegebenen Klappenbewegungsmechanik in umgekehrter Bewegungsrichtung der Klappen realisieren, um zu der Klappenstellung nach der Fig. 2 zu gelangen. Andererseits kann auch eine Situation gewünscht sein, dass während des Fluges durch die genannte Zwangsführung (zeitabschnittsweise) eine Klappenstellung der vorderen Staulufteinlassklappe 3 umgesetzt wird, die nach der Fig. 3 eine Querschnittsverengung der Öffnung des Kanaleinlaufs bzw. eine Verminderung des offenen Einlaufquerschnittes 14 erkennen lässt. Diese Maßnahme wird durch eine Bewegung der vorderen Staulufteinlassklappe 3 in eine Klappenlage erreicht, in welcher das dritte Lager 16 nicht den Kanalboden 20 berühren wird und gleichfalls die nach außen konkav gewölbte Klappenfläche wenigstens teilweise den (maximal verfügbaren) Einlaufquerschnitt 14 reduzieren wird. Diese gewünschte Querschnittsveränderung des Einlaufquerschnitts 14 macht insofern Sinn, dass dadurch in jeder Regelposition der vorderen Staulufteinlassklappe 3, die eine als düsenförmige Geometrie ausgebildete Einlassgeometrie realisiert, die Strömungsgeschwindigkeit und der Massendurchsatz der als Kühlluft für den Stauluftwärmetauscher 9 verwendeten Stauluft, die den reduzierten offenen Einlaufquerschnitt 14 passiert, sich beeinflussen lässt, was wiederum eine gewünschte Einflussnahme auf Erhöhung oder Absenkung der Kühlleistung für den Stauluftwärmetauscher 9 ermöglicht. So wäre es denkbar, dass in jeder ausgeführten Regelposition des Aktuatorantriebs, beispielsweise des (erwähnten) Schrittmotors, die auf die vordere Staulufteinlassklappe 3 mechanisch übertragen wird, letztere dann in einer Zwangsstellung positioniert ist, mit der durch die verengte oder erweiterte Öffnung des Kanaleinlaufs mittels der luftabschottenden Stellung der vorderen Staulufteinlassklappe 3 eine düsenförmige Einlassgeometrie des Staulufteinlasses realisiert ist. Diese Maßnahme ermöglicht außerdem (im Vergleich mit traditionell einem Flugzeug installierten Staulufteinlässen) eine variable bauliche Auslegung des Stauluftkanals 2, die vordergründig auf dessen Dimensionierung abzielt. Durch letztere Maßnahme wird somit schon während der Konzeption einer lufttechnischen Belüftung für einen Stauluftwärmetauscher ein Augenmerk auf die Ersparnis an Flugzeuggewicht gelegt.

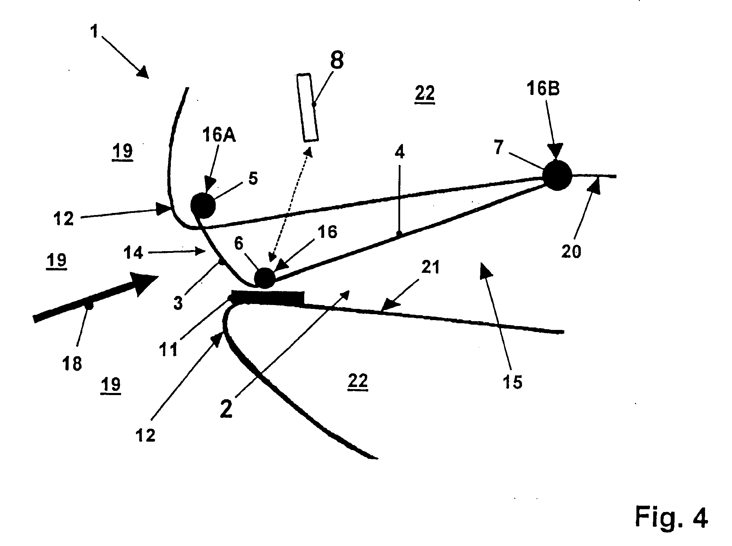

Hinsichtlich der Fig. 4 wird der Kanaleinlauf, hinzukommend der Ausführung nach der Fig. 2, mit einem mechanischen Anschlag 11, beispielsweise einer plattenartigen Auflage (einer Platte) strukturell verstärkt ist, der am Kanalboden 12 nahe der Flügelvorderkante 12 angeordnet ist. Außerdem vermittelt diese Anordnung, dass ein Verschließen des offenen Einlaufquerschnittes 14 durch die vordere Staulufteinlassklappe 3 ebenso möglich ist, sofern die vordere Staulufteinlassklappe 3 und / oder das als Loslager ausgebildete dritte Lager 16 auf dem Anschlag 24 positioniert sind.

Mit diesem Anschlag 11, der sich an der Unterseite des Stauluftkanals 2 befindet, kann ein völliges Schließen verhindert werden, derweise, dass keine Stauluft (kein Kühlluftmassenstrom) mehr den (in dieser Figur nicht gezeigten) Stauluftwärmetauscher 9 erreichen wird. Eine zu definierende minimale Öffnungsfläche kann (wie in der Fig. 4 angedeutet) somit einen minimalen Stauluftmassenstrom (Kühlluftmassenstrom) gewährleisten, ohne dass die betroffene (und figürlich nicht gezeigte) Kühlanlage, in deren Schaltschema auch der Stauluftwärmetauscher 9 einbezogen ist, aufgrund von Überhitzung abgeschaltet werden muss.

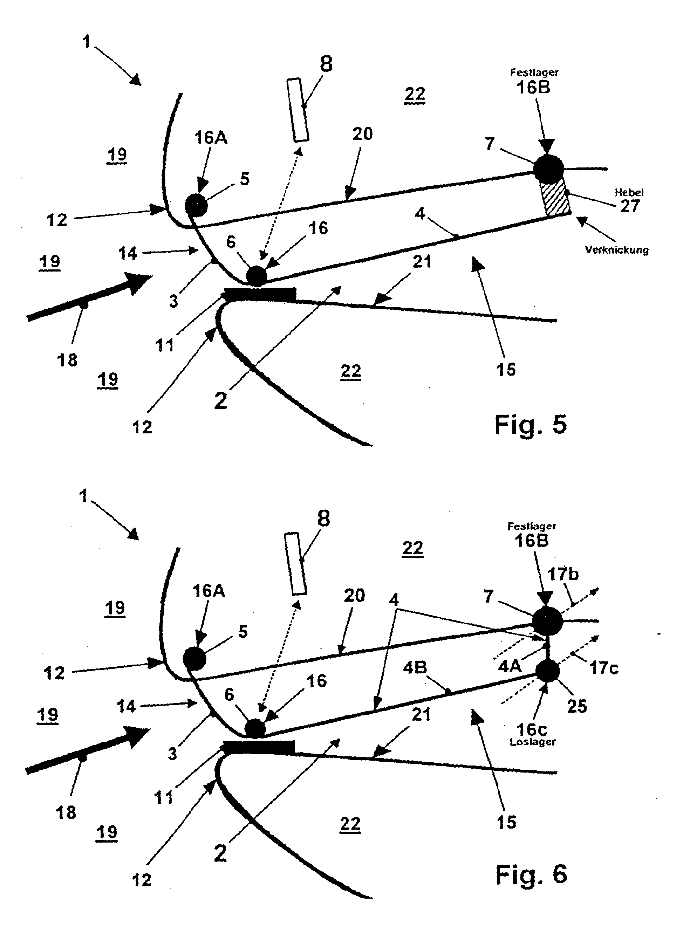

In der Fig. 5 wird eine modifizierte Ausführung des Staulufteinlasses, der in der Fig. 4 gezeigt wird, dargestellt. Danach wird vorgesehen, dass dem (im Vergleich der Ausführungen nach den Figuren 1 bis 4) nunmehr als Festlager ausgebildeten zweiten Lager 16B ein zusätzlicher Hebel 27 drehbeweglich befestigt ist, an dessen freiem Hebelende die hintere Staulufteinlassklappe 4 mit dem Ende, das nicht am als Loslager ausgebildeten dritten Lager 16 drehbeweglich gelagert ist, nahezu lotrecht der Klappe befestigt ist. Dabei ist die Hebelbefestigung der hinteren Staulufteinlassklappe 4 nach der Art einer sogenannten Verknickung ausgeführt. So ist es möglich, dass durch die vom Aktuatorantrieb des Aktuators 8 mechanisch übertragene Zwangsbewegung (durch eine Zug- oder Druckkraft) auf das als Loslager ausgebildete dritten Lager 16 und das jeweils als Festlager ausgebildete erste und zweite Lager 16A, 16B eine um die erste und die zweite Lagerachse 17a, 17b ausgeführte Drehbewegung ausführen werden. Dabei wird die vordere Staulufteinlassklappe 3 eine (nach dem Vorbild der Fig. 4) zum Kanaleinlauf geneigte und den Einlaufquerschnitt 14 nahezu verschließbare Klappenstellung und die hintere Staulufteinlassklappe 4 (trotz der Verknickung) eine zum Kanalboden 20 geneigte Klappenstellung (etwa nach dem Vorbild der Fig. 4) einnehmen können, wie in der Fig. 5 dargestellt, sofern das als Loslager ausgebildete dritte Lager nahe dem plattenartigen Anschlag 11 positioniert ist. Sofern vom Aktuator 8 auf jenes Loslager eine Zugkraft ausgeübt wird, kann das als Festlager ausgebildete zweite Lager 16B die hintere Staulufteinlassklappe 4 nicht vollständig in deren bisher umgesetzte Ausgangslage (nach dem Vorbild der Fig. 1) bewegen, weil einerseits, da nunmehr die Anordnung des als Festlager ausgebildeten zweiten Lagers 16B zu berücksichtigen ist, die (bisher vorgeschlagene) Schienenbeweglichkeit jenes Lagers fehlt und andererseits eine Hebel-Behinderung hingenommen wird. Daran würde auch die Ausbildung jenes zweiten Lagers 16B als Loslager nichts ändern. Somit werden nach dieser Konfiguration der Klappenbewegungsmechanik die vordere und die hintere Staulufteinlassklappe 3, 4 nicht ihre Ausgangslage erreichen können, wobei eine Erhöhung des Strömungswiderstandes der Stauluft im Kanalinneren in Kauf genommen wird.

In der Fig. 6 wird eine weitere modifizierte Ausführung des Staulufteinlasses, der in der Fig. 4 gezeigt wird und der Konfiguration nach der Fig. 5 ähnlich erscheint, dargestellt. Danach wird vorgesehen, dass (im Vergleich der Ausführung nach der Fig. 5) der Hebel 27 durch eine erste hintere Staulufteinlassklappe 4A ersetzt wird. Diese Klappe ist (nach dem Vorbild der Fig. 5) am als Festlager ausgebildeten zweiten Lager 16B an einem Ende der Klappe drehbeweglich befestigt.

Das andere Ende dieser ersten hinteren Staulufteinlassklappe 4A ist an einem als Loslager ausgebildeten vierten Lager 16C drehbeweglich befestigt. An diesem Loslager ist nunmehr weiterhin das sogenannte andere Ende einer zweiten hinteren Staulufteinlassklappe 4B befestigt, deren verbleibendes Ende nach dem Vorbild der Figuren 1 bis 4 am als Loslager ausgebildeten dritten Lager 16 drehbeweglich befestigt ist.

Danach ist die (aus den Figuren 1 bis 5 vergleichbare) hintere Staulufteinlassklappe 4 nunmehr aus dem Zusammenschluss einer ersten hinteren Staulufteinlassklappe 4A und einer zweiten hinteren Staulufteinlassklappe 4B gebildet, die hintereinander gelegen sind. Die Drehbeweglichkeit der ersten und der zweiten hinteren Staulufteinlassklappe 4A, 4B durch das zusätzliche vierte Lager 16C gewährleistet.

Die erste hintere Staulufteinlassklappe 4A ist einseitig am als Festlager ausgebildeten zweiten Lager 16B befestigt und um den zweiten Drehpunkt 7, der auf der zweiten Lagerachse 17b dieses Festlagers angeordnet ist, drehbeweglich (schwenkbar) gelagert. Die zweite hintere Staulufteinlassklappe 4B ist einseitig am als Loslager ausgebildeten dritten Lager 16 befestigt und um den dritten Drehpunkt 6, der auf der längs- und / oder queraxial veränderbaren dritten Lagerachse 17 dieses Loslagers angeordnet ist, drehbeweglich (schwenkbar) gelagert. Außerdem ist die erste und die zweite hintere Staulufteinlassklappe 4A, 4B andererseits dem als Loslager ausgebildeten vierten Lager 16C befestigt und um einen vierten Drehpunkt 25, der auf einer längs- und / oder queraxial veränderbaren vierten Lagerachse 17c dieses Loslagers angeordnet ist, drehbeweglich (schwenkbar) gelagert.

Die vordere Staulufteinlassklappe 3 bleibt (nach dem Vorbild der Figuren 1 bis 5) konkav gewölbt, wobei die erste und die zweite hintere Staulufteinlassklappe 4A, 4B (nach dem Vorbild der hinteren Staulufteinlassklappe 4 gemäß den Figuren 1 bis 5) ebenflächig und nicht gewölbt ausgebildet sind. Die Klappenlängen der ersten und der zweiten hinteren Staulufteinlassklappe 4A, 4B sind unterschiedlich ausgeführt. Dabei ist beispielsweise vorgesehen, dass die Klappenlänge der ersten hinteren Staulufteinlassklappe 4A (nach dem Vorbild der Fig. 6) größer ist, wobei auch denkbar ist, dass die Klappenlänge der ersten hinteren Staulufteinlassklappe 4A gleich der Klappenlänge der zweiten hinteren Staulufteinlassklappe 4B ist.

Mit dieser Konfiguration ist es im Vergleich der Ausführung nach der Fig. 5 dann möglich, dass die hintere Staulufteinlassklappe 4, die aus dem (drehbeweglich gelagerten) Zusammenschluss der ersten hinteren Staulufteinlassklappe 4A und der zweiten hinteren Staulufteinlassklappe 4B besteht, und die vordere Staulufteinlassklappe 3 in Richtung der Tragflügeltiefe t angeordnete Ausgangslage zurückgeführt werden können. Dabei werden die vordere Staulufteinlassklappe 3 und die zweite hintere Staulufteinlassklappe 4B wenigstens einen Teilbereich der Kanaldecke 20 bilden, wobei die erste hintere Staulufteinlassklappe 4A dann auf der zweiten hinteren Staulufteinlassklappe 4B gelegen sein wird. Sofern eine Aussparung der Kanaldecke 20 vorgesehen wird, ist eine ungehinderte Durchführung des als Loslager ausgebildeten zweiten und vierten Lagers 16B, 16C gewährleistet, die dann (in der geschilderten Ausgangslage der Klappen) oberhalb der Kanaldecke 20 positioniert sind.

Durch die vorgeschlagene Positionierung und Gestaltung des beispielgemäßen Staulufteinlasses mit den denkbaren Ausführungen der (nach den Figuren 1 bis 4) aus zwei Klappen integrierten Staulufteinlassklappe 13 und deren Modifikationen (nach den Figuren 5 und 6) können (soweit noch nicht erwähnt) folgende Vorteile erreicht werden:
a) Durch die speziell gestaltete Außengeometrie und Lagerung der integrierten Staulufteinlassklappe 13 (vorderen Staulufteinlassklappe 3), welche exakt der entsprechenden Flügelkontur entspricht, werden Ablöseerscheinungen der flügelumgebenden Grenzschicht(en) an Luft verhindert bzw. deutlichst minimiert und eine Erhöhung des Flugzeuggesamtwiderstandes vermieden; wobei
b) durch eine speziell gestaltete Innengeometrie und Lagerung dieser Staulufteinlassklappe 13 (Staulufteinlassklappen 3, 4 resp. auch 4A, 4B) die Einlassgeometrie jenes Staulufteinlasses (i. b. des Kanaleinlaufes) in jeder Regelposition als düsenförmige Geometrie ausgebildet wird. Als Folge dessen kann entweder der Gesamtkühlluftmassenstrom (die Bereitstellung an Stauluft) gesteigert werden, weshalb wiederum die (bereitgestellte) Kühlleistung gesteigert werden kann. Sofern diese genannten Maßnahmen entsprechende Beachtung finden werden, besteht die Möglichkeit, bereits während der Gestaltung (Auslegung) des Stauluftkanals und dessen Dimensionierung einen entsprechenden Einfluss hinsichtlich dem verwendeten Material und dessen mögliche gewichtsmäßige Reduzierung auszuüben;
   Außerdem kann dadurch, dass die spezielle Geometrie der integrierten Staulufteinlassklappe 13 (der vorderen und hinteren Staulufteinlassklappe 3, 4) erst der Einbau eines derartigen Stauluftkanals im Flügelbereich ermöglicht wird, sofern der Klimaanlageneinbau im Flügelwurzelbereich vorgenommen wird,
c) die Länge des Stauluftkanals 2 reduziert und somit wiederum das Gewicht des Kanals entsprechend verringert werden; und kann, da der Stauluftkanal 2 im optimalen Bereich der Flügelvorderkante installiert wird, wodurch erreicht wird, dass der Staulufteinlass (resp. der Kanaleinlauf des Staulufteinlass) im Bereich des maximalen Staupunktes installierte Staulufteinlass positioniert ist,
   Weiterhin kann
d) erreicht werden, dass infolge eines erhöhten Kühlluftmassenstromes die Kühlleistung der Klimaanlage gesteigert wird bzw. durch entsprechende Verringerung der Stauluftgeometrie entsprechende Gewicht gespart werden kann;
   und kann durch den Einbau des Staulufteinlasses an der Flügelvorderkante im Bereich der "Belly Fairing" umgesetzt werden, dass
e) das verfügbare Einbauvolumen anderen Systemen bereitgestellt werden.

Es wird deshalb vereinfacht vorgeschlagen, dass die vordere Staulufteinlassklappe 3 mit einer kreisförmigen Geometrie ausgeführt ist, die im ersten Drehpunkt 5 drehbar gelagert ist, so dass in jeder regelnden Klappenposition die Außengeometrie exakt die Geometrie der Flügelvorderkante nachbildet.

Die hintere Staulufteinlassklappe 4, die im zweiten Drehpunkt 7, dem auch die vordere Staulufteinlassklappe drehbeweglich gelagert ist, und im dritten Lagerpunkt 6 gelagert ist, ermöglicht somit (entsprechend der Klappenstellung beider Klappen im Kanal) die Ausbildung eines optimalen, düsenförmigen Kanalquerschnittes.

Auf der Unterseite des Stauluftkanals 2 ist ein mechanischer Anschlag 11 kanalverstärkend angebracht, welcher eine minimale Öffnung des Staulufteinlasskanals gewährleistet, um für Fehlerfälle einen minimalen Massenluftstrom für die Kühlung der Stauluftwärmetauscher 9 zu erreichen.

## Patentansprüche

1. Klimaanlage eines Verkehrsflugzeugs mit einem am Ausgang eines Stauluftkanals (2) angeordneten Stauluftwärmetauscher und einem Staulufteinlaß, bestehend aus einem Stauluftkanal (2) mit einem Kanaleinlauf, dessen offener Einlaufquerschnitt (14) an der Flügelvorderkante (12) des Tragflügels (1) in die Außenkontur des Flugzeugs eingelassen ist, wobei der Stauluftkanal (2) von dort aus innerhalb des Tragflügels (1) mit einem offenen Kanalquerschnitt (15) fortgesetzt und entlang einer Profilsehne.(23) oder parallel oder annähernd parallel zur Profilsehne (23) des tragflügelprofils in dessen Tragflügeltiefe (t) angeordnet ist, sowie mit einer integrierten Staulufteinlaßklappe (13), die im Kanalinneren drehbeweglich gelagert ist, und einem Aktuator (8), der mit der Staulufteinlaßklappe (13) mechanisch gekoppelt ist, um den Einlaufquerschnitt (14) des Stauluftkanals (2) zu öffnen oder zu schließen, **dadurch gekennzeichnet, dass** die Staulufteinlaßklappe (13) eine vordere Klappe (3) und eine hintere Klappe (4) umfaßt, die im Stauluftkanal (2) angeordnet und miteinander durch ein Lager (16) gelenkig verbunden sind, wobei die vordere Klappe (3) an einem ersten Lager (16A) nahe dem Einlaufquerschnitt (14) schwenkbar gelagert und die hintere Klappe (4) an einem zweiten Lager (16B) schwenkbar gelagert ist und das die Klappen (3, 4) gelenkig verbindende Lager (16) durch ein drittes Lager gebildet ist, das zwischen dem erste Lager (16A) und dem zweiten Lager (16B) angeordnet ist, wobei die vordere Klappe (3) und die hintere Klappe (4) im Stauluftkanal (2) in der Richtung der Tragflügeltiefe (t) hintereinander angeordnet sind und die Lager (16A, 168, 16) der Klappen (3, 4) jeweils sich in Richtung der Tragflügelspannweite (S) erstreckende Lagerachsen (17, 17A, 17B) aufweisen, und dass die erste Klappe (3) konkav nach außen gewölbt und im verschlossenen Zustand an die Tragflügelkontur im Bereich der Flügelvorderkante (12) angepaßt ist, und die erste Klappe (3) und die zweite Klappe (4) im geöffneten Zustand eine gestreckte Position zur ungehinderten Freigabe des offenen Kanalquerschnitts (15) einnehmen, wobei durch dazwischenliegende Positionen der Staulufteinlaßklappe (13) der Einlaufquerschnitt (14) teilweise geöffnet ist.

2. Klimaanlage eines Verkehrsflugzeugs mit einem am Ausgang eines Stauluftkanals angeordneten Stauluftwärmetauscher und einem Staulufteinlaß nach Anspruch 1, **dadurch gekennzeichnet, dass** das dritte Lager (16) ein Loslager und das erste Lager (16A) ein Festlager und das zweite Lager (16B) ein Los- oder ein Festlager ist.

3. Klimaanlage eines Verkehrsflugzeugs mit einem am Ausgang eines Stauluftkanals angeordneten Stauiuftwärmetauscher und einem Staulufteinlaß nach Anspruch 1 oder 2, **dadurch gekennzeichnet, dass** die vordere Klappe (3) einseitig an dem als Festlager ausgebildeten ersten Lager (16A) befestigt und um einen ersten Drehpunkt (5), der auf einer ersten Lagerachse (17a) dieses Festlagers angeordnet ist, drehbeweglich schwenkbar gelagert ist, sowie die hintere Klappe (4) einseitig an dem als Loslager ausgebildeten zweiten Lager (16B) befestigt und um einen zweiten Drehpunkt (7), der auf einer längsaxial veränderbaren zweiten Lagerachse (17b) dieses Loslagers angeordnet ist, drehbeweglich schwenkbar gelagert ist, und außerdem die vordere und hintere Klappe (3, 4) andererseits an dem als Loslager ausgebildeten dritten Lager (16) befestigt und um einen dritten Drehpunkt (6), der auf einer längs- und/oder queraxial veränderbaren dritten Lagerachse (17) dieses Loslagers angeordnet ist, drehbeweglich schwenkbar gelagert sind.

4. Klimaanlage eines Verkehrsflugzeugs mit einem am Ausgang eines Stauluftkanals angeordneten Stauluftwärmetauscher und einem Staulufteinlaß nach Anspruch 1 oder 2, **dadurch gekennzeichnet, dass** die hintere Klappe (4) aus dem Zusammenschluß einer ersten hinteren Klappe (4A) und einer zweiten hinteren Klappe (4B) gebildet ist, die hintereinander gelegen sind, wobei die Drehbeweglichkeit der ersten und der zweiten hinteren Klappe (4A. 48) durch ein zusätzliches viertes Lager (16C) gewährleistet ist.

5. Klimaanlage eines Verkehrsflugzeugs mit einem am Ausgang eines Stauluftkanals angeordneten Staüluftwärrnetauscher und einem Staulufteinlaß nach Anspruch 4, **dadurch gekennzeichnet, dass** die erste hintere Klappe (4A) einseitig an dem als Festlager ausgebildeten zweiten Lager (16B) befestigt und um den zweiten Drehpunkt (7), der auf der zweiten Lagerachse (17b) dieses Festlagers angeordnet ist, drehbeweglich schwenkbar gelagert ist, und die zweite hintere Klappe (4B) einseitig an dem als Loslager ausgebildeten dritten Lager (16) befestigt und um den dritten Drehpunkt (6), der auf der längs- und/oder queraxial veränderbaren dritten Lagerachse (17) dieses Loslagers angeordnet ist, drehbweglich schwenkbar gelagert ist, außerdem die erste und die zweite hintere Klappe (4A, 4B) andererseits an dem als Loslager ausgebildeten vierten Lager (16C) befestigt und um einen vierten Drehpunkt (25), der auf einer längs- und/oder queraxial veränderbaren vierten Lagerachse (17c) dieses Loslagers angeordnet ist, drehbeweglich schwenkbar gelagert sind.

6. Klimaanlage eines Verkehrsflugzeugs mit einem am Ausgang eines Stauluftkanals angeordneten Stauluftwärmetauscher und einem Staulufteinlaß nach einem der Ansprüche 1 bis 5, **dadurch gekennzeichnet, dass** die vordere Klappe (3) konkav gewölbt und die hintere Klappe (4) oder die erste und die zweite hintere Klappe (4A, 4B) ebenflächig und nicht gewölbt ausgebildet sind, wobei deren Klappenlängen unterschiedlich sind.

7. Klimaanlage eines Verkehrsflugzeugs mit einem am Ausgang eines Stauluftkanals angeordneten Stauluftwärmetauscher und einem Staulufteinlaß nach Anspruch 6, **dadurch gekennzeichnet, dass** die Klappenlänge der ersten hinteren Klappe (4A) größer oder gleich der Klappenlänge der zweiten hinteren Klappe (4B) ist.

8. Klimaanlage eines Verkehrsflugzeugs mit einem am Ausgang eines Stauluftkanals angeordneten Stauluftwärmetauscher und einem Staulufteinlaß nach einem der Ansprüche 1 bis 7, **dadurch gekennzeichnet, dass** ausgangs des Stauluftkanals (2) ein Stauluftwärmetauscher (9) angeordnet ist, wobei die am Einlaufquerschnitt (14) einströmende Stauluft (18) der flügelnahen Flugzeugumgebung (19) während des Flugs, sofern der Einlaufquerschnitt (14) nicht durch die Staulufteinlaßklappe (13) verschlossen ist, durch das Kanalinnere strömen und den Stauluftwärmetauscher (9) erreichen und kühlen und im weiteren Verlauf als Abluft (18a) an einen dem Stauluftwärmetauscher (9) nachgeschalteten Auslaßkanal (10) abgegeben und von diesem an die Flugzeugumgebung (19) abgegeben wird.

9. Klimaanlage eines Verkehrsflugzeugs mit einem am Ausgang eines Stauluftkanals angeordneten Stauluftwärmetauscher und einem Staulufteinlaß nach einem der Ansprüche 1 bis 8, **dadurch gekennzeichnet, dass** die Klappenkontur der vorderen Klappe (3) konkav nach außen gewölbt und der Tragflügelkontur im Bereich der Flügelvorderkante (12) angepaßt ist, so dass im klappenverschlossenen Zustand des Einlaufquerschnitts (14) der Oberflächenbereich der Flügelvorderkante (12) keine oder nur geringe Erhöhung des Flugzeuggesamtwiderstands und entsprechende Ablöseerscheinungen einer den Tragflügel (1) umgebenden Luftströmung bewirken wird.

10. Klimaanlage eines Verkehrsflugzeugs mit einem am Ausgang eines Stauluftkanals angeordneten Stauluftwärmetauscher und einem Staulufteinlaß nach Anspruch 9, **dadurch gekennzeichnet, dass** die drehbewegliche Lagerung der vorderen Klappe (3) um den ersten und zweiten Drehpunkt (5, 6) auf die Umsetzung einer konturengetreuen Nachbildung der Tragflügelkontur mit der vorderen Stauluftklappe (3) abgestimmt ist.

11. Klimaanlage eines Verkehrsflugzeugs mit einem am Ausgang eines Stauluftkanals angeordneten Stauluftwärmetauscher und einem Staulufteinlaß nach einem der Ansprüche 1 bis 10, **dadurch gekennzeichnet, dass** der Aktuator (8) einen stufenlos regelbaren Schrittmotor enthält.

12. Klimaanlage eines Verkehrsflugzeugs mit einem am Ausgang eines Stauluftkanals angeordneten Stauluftwärmetauscher und einem Staulufteinlaß nach Anspruch 11, **dadurch gekennzeichnet, dass** in jeder Regelposition des Schrittmotors die vordere Klappe (3) in einer Zwangsstellung positioniert ist und mit der Kontur des Kanaleinlaufs und der Kontur der dermaßen positionierten vorderen Klappe (3) eine düsenförmige Einlaßgeometrie des Staulufteinlasses realisiert ist.

13. Klimaanlage eines Verkehrsflugzeugs mit einem am Ausgang eines Stauluftkanals angeordneten Stauluftwärmetauscher und einem Staulufteinlaß nach einem der Ansprüche 1 bis 12, **dadurch gekennzeichnet, dass** der Kanaleinlauf am Tragflügel (1) im maximalen Staupunkt der den Tragflügel (1) anströmenden Luftströmung angeordnet ist.

14. Klimaanlage eines Verkehrsflugzeugs mit einem am Ausgang eines Stauluftkanals angeordneten Stauluftwarmetauscher und einem Staulufteinlaß nach Anspruch 1, 2 oder 3, **dadurch gekennzeichnet, dass** die Kanaldecke (20) massiv ausgebildet ist und wenigstens eine Aussparung, welche einen definierten Flächenbereich der Kanaldecke (20) öffnet, aufweist, durch die eine ungehinderte Durchführung des als Loslagers ausgebildeten dritten Lagers (16) und der an diesem drehbeweglich befestigten vorderen und hinteren Klappe (3, 4) gewährleistet ist.

15. Klimaanlage eines Verkehrsflugzeugs mit einem am Ausgang eines Stauluftkanals angeordneten Stauluftwärmetauscher und einem Staulufteinlaß nach den Ansprüchen 4 und 14, **dadurch gekennzeichnet, dass** durch die Aussparung außerdem eine ungehinderte Durchführung des als Loslager ausgebildeten vierten Lagers (16C) vorgesehen ist.

16. Klimaanlage eines Verkehrsflugzeugs mit einem am Ausgang eines Stauluftkanals angeordneten Stauluftwärmetauscher und einem Staulufteinlaß nach den Ansprüchen 1 und 2, **dadurch gekennzeichnet, dass** der Aktuatorantrieb und das als Loslager ausgebildete dritte Lager (16) mit einem Gestänge mechanisch gekoppelt sind, mit dem eine geradlinig ausgeführte Aktuatorbewegung auf dieses Loslager übertragbar ist.

17. Klimaanlage eines Verkehrsflugzeugs mit einem am Ausgang eines Stauluftkanals angeordneten Stauluftwärmetauscher und einem Staulufteinlaß nach Anspruch 3, **dadurch gekennzeichnet, dass** das als Festlager ausgebildete erste Lager (16A) ortsfest und das als Loslager ausgebildete zweite Lager (16B) ortsveränderlich entlang der Tragflügeltiefe (t) angeordnet sind.

18. Klimaanlage eines Verkehrsflugzeugs mit einem am Ausgang eines Stauluftkanals angeordneten Stauluftwärmetauscher und einem Staulufteinlaß nach Anspruch 3, **dadurch gekennzeichnet, dass** das als Loslager ausgebildete zweite Lager (16B) ein Axiallager ist, welches schienenbeweglich angeordnet ist.

19. Klimaanlage eines Verkehrsflugzeugs mit einem am Ausgang eines Stauluftkanals angeordneten Stauluftwärmetauscher und einem Staulufteinlaß nach Anspruch 17, **dadurch gekennzeichnet, dass** die Aktuatorbewegung eine Druck- oder Zugbewegung ist, die auf das als Loslager ausgebildete dritte Lager (16) übertragen wird, so dass eine zum Kanalboden (21) und gleichfalls zum Einlaufquerschnitt (14) gerichtete Klappenbewegung der vorderen Klappe (3) und eine zum Kanalboden (21) geneigte Senkbewegung der hinteren Klappe (4) oder umgekehrt realisierbar ist.

20. Klimaanlage eines Verkehrsflugzeugs mit einem am Ausgang eines Stauluftkanals angeordneten Stauluftwärmetauscher und einem Staulufteinlaß nach Anspruch 1, 2 oder 3, **dadurch gekennzeichnet, dass** der Kanaleinlauf mit einem mit der Staulufteirilaßklappe (13) oder mit dem dritten Lager (16) zusammenwirkenden plattenartigen Anschlags (11) strukturell verstärkt ist, der am Kanalboden (21) nahe der Flügelvorderkante (12) angeordnet ist.

21. Klimaanlage eines Verkehrsflugzeugs mit einem am Ausgang eines Stauluftkanals angeordneten Stauluftwärmetauscher und einem Staulufteinlaß nach den Ansprüchen 3 und 20, **dadurch gekennzeichnet, dass** die vordere Klappe (3) und/oder das als Loslager ausgebildete dritte Lager (16) auf dem Anschlag (24) positioniert sind, wenn der Einlaufquerschnitt (14) durch die vordere Staulufteinlaßklappe (3) klappenverschlossen ist.

22. Klimaanlage eines Verkehrsflugzeugs mit einem am Ausgang eines Stauluftkanals angeordneten Stauluftwärmetauscher und einem Staulufteinlaß nach Anspruch 1, 2 oder 3, **dadurch gekennzeichnet, dass** anstelle oder zusätzlich zu dem Aktuator (8) eine vorgespannte Feder mit definierter Steifigkeit angeordnet ist, die aufgrund des Staudrucks der durch die Flugzeugbewegung auf dem Kanaleinlauf lastenden Stauluft (18) geregelt beaufschlagt ist.

23. Klimaanlage eines Verkehrsflugzeugs mit einem am Ausgang eines Stauluftkanals angeordneten Stauluftwärmetauscher und einem Staulufteinlaß nach Anspruch 22, **dadurch gekennzeichnet, dass** die Feder eine Druckfeder ist, die dem Aktuator (8) parallel geschaltet und mit einem Ende an der Tragflügelstruktur (22) befestigt ist und deren anderes Ende den Federdruck auf das als Loslager ausgebildete dritte Lager (16) überträgt.

24. Klimaanlage eines Verkehrsflugzeugs mit einem am Ausgang eines Stauluftkanals angeordneten Stauluftwärmetauscher und einem Staulufteinlaß nach einem der Ansprüche 1 bis 3, **dadurch gekennzeichnet, dass** die Kanaldecke (20) durch die entlang der Profilsehne (23) oder parallel oder annähernd parallel zur Profilsehne (23) angeordnete vordere und hintere Klappe (3, 4) gebildet ist.

25. Klimaanlage eines Verkehrsflugzeugs mit einem am Ausgang eines Stauluftkanals angeordneten Stauluftwärmetauscher und einem Staulufteinlaß nach Anspruch 1, 2 oder 3, **dadurch gekennzeichnet, dass** an dem als Festlager ausgebildeten zweiten Lager (16B) ein zusätzlicher Hebel (27) drehbeweglich befestigt ist, an dessen freiem Hebelende die hintere Klappe (4) mit dem Ende, das nicht an dem als Loslager ausgebildeten dritten Lager (16) drehbeweglich gelagert ist, nahezu lotrecht zu der Klappe befestigt ist.

26. Klimaanlage eines Verkehrsflugzeugs mit einem am Ausgang eines Stauluftkanals angeordneten Stauluftwärmetauscher und einem Staulufteinlaß nach Anspruch 25, **dadurch gekennzeichnet, dass** die Hebelbefestigung der hinteren Klappe (4) in Form einer Verknickung vorgesehen ist.

## Claims

1. Air conditioning system of a commercial aircraft having a ram-air heat exchanger disposed at the exit of a ram-air duct (2) as well as a ram-air intake, comprising a ram-air duct (2) with a duct inlet, the open inlet cross section (14) of which at the leading edge (12) of the wing (1) is let into the external contour of the aircraft, wherein the ram-air duct (2) continues from there inside the wing (1) with an open duct cross section (15) and is disposed along a chord (23) or parallel or approximately parallel to the chord (23) of the wing profile in the wing depth (t) thereof, and comprising an integrated ram-air intake flap (13), which is mounted rotatably in the duct interior, and an actuator (8), which is mechanically coupled to the ram-air intake flap (13), for opening or closing the inlet cross section (14) of the ram-air duct (2), **characterized in that** the ram-air intake flap (13) comprises a front flap (3) and a rear flap (4), which are disposed in the ram-air duct (2) and hinge-connected to one another by a bearing (16), wherein the front flap (3) is pivotably mounted on a first bearing (16A) close to the inlet cross section (14) and the rear flap (4) is pivotably mounted on a second bearing (16B) and the bearing (16) that hinge-connects the flaps (3, 4) is formed by a third bearing disposed between the first bearing (16A) and the second bearing (16B), wherein the front flap (3) and the rear flap (4) are disposed successively in the direction of the wing depth (t) in the ram-air duct (2) and the bearings (16A, 16B, 16) of the flaps (3, 4) each have bearing axes (17, 17A, 17B) extending in the direction of the wingspan (S), and that the first flap (3) is curved concavely outwards and in the closed state is adapted to the wing contour in the region of the wing leading edge (12), and the first flap (3) and the second flap (4) in the open state occupy a straight position for unimpeded clearance of the open duct cross section (15), wherein by means of intermediate positions of the ram-air intake flap (13) the inlet cross section (14) is partially opened.

2. Air conditioning system of a commercial aircraft having a ram-air heat exchanger disposed at the exit of a ram-air duct (2) as well as a ram-air intake according to claim 1, **characterized in that** the third bearing (16) is a movable bearing and the first bearing (16A) is a fixed bearing and the second bearing (16B) is a movable or a fixed bearing.

3. Air conditioning system of a commercial aircraft having a ram-air heat exchanger disposed at the exit of a ram-air duct (2) as well as a ram-air intake according to claim 1 or 2, **characterized in that** the front flap (3) is fastened at one end to the first bearing (16A) in the form of a fixed bearing and is pivotably mounted rotatably about a first pivot (5) that is disposed on a first bearing axis (17a) of said fixed bearing, and the rear flap (4) is fastened at one end to the second bearing (16B) in the form of a movable bearing and is pivotably mounted rotatably about a second pivot (7) that is disposed on a longitudinally-axially variable second bearing axis (17b) of said movable bearing, and moreover the front and rear flap (3, 4) are fastened at the other end to the third bearing (16) in the form of a movable bearing and pivotably mounted rotatably about a third pivot (6) that is disposed on a longitudinally and/or transversely axially variable third bearing axis (17) of said movable bearing.

4. Air conditioning system of a commercial aircraft having a ram-air heat exchanger disposed at the exit of a ram-air duct (2) as well as a ram-air intake according to claim 1 or 2, **characterized in that** the rear flap (4) is formed from the combination of a first rear flap (4A) and a second rear flap (4B) that are situated one behind the other, wherein the rotatability of the first and the second rear flap (4A, 4B) is guaranteed by means of an additional fourth bearing (16C).

5. Air conditioning system of a commercial aircraft having a ram-air heat exchanger disposed at the exit of a ram-air duct (2) as well as a ram-air intake according to claim 4, **characterized in that** the first rear flap (4A) is fastened at one end to the second bearing (16B) in the form of a fixed bearing and is pivotably mounted rotatably about the second pivot (7), which is disposed on the second bearing axis (17b) of said fixed bearing, and the second rear flap (4B) is fastened at one end to the third bearing (16) in the form of a movable bearing and is pivotably mounted rotatably about the third pivot (6), which is disposed on the longitudinally axially and/or transversely axially variable third bearing axis (17) of said movable bearing, moreover the first and the second rear flap (4A, 4B) are fastened at the other end to the fourth bearing (16C) in the form of a movable bearing and pivotably mounted rotatably about a fourth pivot (25), which is disposed on a longitudinally axially and/or transversely axially variable fourth bearing axis (17c) of said movable bearing.

6. Air conditioning system of a commercial aircraft having a ram-air heat exchanger disposed at the exit of a ram-air duct (2) as well as a ram-air intake according to one of claims 1 to 5, **characterized in that** the front flap (3) is of a concavely curved design and the rear flap (4) or the first and the second rear flap (4A, 4B) are of a planar and non-curved design, wherein their flap lengths are different.

7. Air conditioning system of a commercial aircraft having a ram-air heat exchanger disposed at the exit of a ram-air duct (2) as well as a ram-air intake according to claim 6, **characterized in that** the flap length of the first rear flap (4A) is greater than or equal to the flap length of the second rear flap (4B).

8. Air conditioning system of a commercial aircraft having a ram-air heat exchanger disposed at the exit of a ram-air duct (2) as well as a ram-air intake according to one of claims 1 to 7, **characterized in that** at the exit of the ram-air duct (2) a ram-air heat exchanger (9) is disposed, wherein the ram-air (18) coming from the aircraft environment (19) near the wing in flight and flowing in at the inlet cross section (14), provided the inlet cross section (14) is not closed by the ram-air intake flap (13), will flow through the duct interior and reach the ram-air heat exchanger (9) and cool and is subsequently delivered as outgoing air (18a) to an outlet channel (10) disposed downstream of the ram-air heat exchanger (9) and from there to the aircraft environment (19).

9. Air conditioning system of a commercial aircraft having a ram-air heat exchanger disposed at the exit of a ram-air duct (2) as well as a ram-air intake according to one of claims 1 to 8, **characterized in that** the flap contour of the front flap (3) is curved concavely outwards and adapted to the wing contour in the region of the wing leading edge (12) so that in the closed-flap state of the inlet cross section (14) the surface region of the wing leading edge (12) will give rise to no or only a slight increase of the aircraft total drag and to corresponding separation phenomena of an air flow surrounding the wing (1).

10. Air conditioning system of a commercial aircraft having a ram-air heat exchanger disposed at the exit of a ram-air duct (2) as well as a ram-air intake according to claim 9, **characterized in that** the mounting of the front flap (3) rotatably about the first and second pivot (5, 6) is tuned to the realization of a true-to-contour simulation of the wing contour by the front ram-air flap (3).

11. Air conditioning system of a commercial aircraft having a ram-air heat exchanger disposed at the exit of a ram-air duct (2) as well as a ram-air intake according to one of claims 1 to 10, **characterized in that** the actuator (8) comprises a continuously controllable stepping motor.

12. Air conditioning system of a commercial aircraft having a ram-air heat exchanger disposed at the exit of a ram-air duct (2) as well as a ram-air intake according to claim 11, **characterized in that** in each control position of the stepping motor the front flap (3) is positioned in a positive setting and by means of the contour of the duct inlet and the contour of the thus positioned front flap (3) a nozzle-shaped intake geometry of the ram-air intake is realized.

13. Air conditioning system of a commercial aircraft having a ram-air heat exchanger disposed at the exit of a ram-air duct (2) as well as a ram-air intake according to one of claims 1 to 12, **characterized in that** the duct inlet is disposed on the wing (1) at the maximum stagnation point of the air flow against the wing (1).

14. Air conditioning system of a commercial aircraft having a ram-air heat exchanger disposed at the exit of a ram-air duct (2) as well as a ram-air intake according to claim 1, 2 or 3, **characterized in that** the duct ceiling (20) is of a solid construction and has at least one recess, which opens a defined surface area of the duct ceiling (20) and through which an unimpeded leadthrough of the third bearing (16) in the form of a movable bearing and of the front and rear flaps (3, 4) rotatably fastened thereto is guaranteed.

15. Air conditioning system of a commercial aircraft having a ram-air heat exchanger disposed at the exit of a ram-air duct (2) as well as a ram-air intake according to claims 4 and 14, **characterized in that** by means of the recess an unimpeded leadthrough of the fourth bearing (16C) in the form of a movable bearing is moreover provided.

16. Air conditioning system of a commercial aircraft having a ram-air heat exchanger disposed at the exit of a ram-air duct (2) as well as a ram-air intake according to claims 1 and 2, **characterized in that** the actuator drive and the third bearing (16) in the form of a movable bearing are mechanically coupled to a linkage, by means of which a rectilinearly executed actuator movement is transmissible to said movable bearing.

17. Air conditioning system of a commercial aircraft having a ram-air heat exchanger disposed at the exit of a ram-air duct (2) as well as a ram-air intake according to claim 3, **characterized in that** the first bearing (16A) in the form of a fixed bearing is disposed in a stationary manner and the second bearing (16B) in the form of a movable bearing is disposed displaceably along the wing depth (t).

18. Air conditioning system of a commercial aircraft having a ram-air heat exchanger disposed at the exit of a ram-air duct (2) as well as a ram-air intake according to claim 3, **characterized in that** the second bearing (16B) in the form of a movable bearing is a thrust bearing that is disposed movably on rail(s).

19. Air conditioning system of a commercial aircraft having a ram-air heat exchanger disposed at the exit of a ram-air duct (2) as well as a ram-air intake according to claim 17, **characterized in that** the actuator movement is a pushing or pulling movement that is transmitted to the third bearing (16) in the form of a movable bearing, so that a flap movement of the front flap (3) in the direction of the duct base (21) and likewise in the direction of the inlet cross section (14) as well as a lowering movement of the rear flap (4) inclined towards the duct base (21) or vice versa may be realized.

20. Air conditioning system of a commercial aircraft having a ram-air heat exchanger disposed at the exit of a ram-air duct (2) as well as a ram-air intake according to claim 1, 2 or 3, **characterized in that** the duct inlet is structurally reinforced by a plate-like stop (11), which interacts with the ram-air intake flap (13) or with the third bearing (16) and is disposed on the duct base (21) close to the wing leading edge (12).

21. Air conditioning system of a commercial aircraft having a ram-air heat exchanger disposed at the exit of a ram-air duct (2) as well as a ram-air intake according to claims 3 and 20, **characterized in that** the front flap (3) and/or the third bearing (16) in the form of a movable bearing are positioned on the stop (11) when the inlet cross section (14) is closed by the front ram-air intake flap (3).

22. Air conditioning system of a commercial aircraft having a ram-air heat exchanger disposed at the exit of a ram-air duct (2) as well as a ram-air intake according to claim 1, 2 or 3, **characterized in that** instead of or in addition to the actuator (8) a biased spring of defined stiffness is disposed, which is acted upon in a controlled manner owing to the ram pressure of the ram air (18), which as a result of the aircraft movement exerts a load on the duct inlet.

23. Air conditioning system of a commercial aircraft having a ram-air heat exchanger disposed at the exit of a ram-air duct (2) as well as a ram-air intake according to claim 22, **characterized in that** the spring is a compression spring, which is connected in parallel to the actuator (8) and fastened by one end to the wing structure (22) and the other end of which transmits the spring pressure to the third bearing (16) in the form of a movable bearing.

24. Air conditioning system of a commercial aircraft having a ram-air heat exchanger disposed at the exit of a ram-air duct (2) as well as a ram-air intake according to one of claims 1 to 3, **characterized in that** the duct ceiling (20) is formed by the front and rear flaps (3, 4), which are disposed along the chord (23) or parallel or approximately parallel to the chord (23).

25. Air conditioning system of a commercial aircraft having a ram-air heat exchanger disposed at the exit of a ram-air duct (2) as well as a ram-air intake according to claim 1, 2 or 3, **characterized in that** rotatably fastened to the second bearing (16B) in the form of a fixed bearing is an additional lever (27), on the free lever end of which the rear flap (4) is fastened almost perpendicular to the flap by the end, which is not rotatably mounted on the third bearing (16) in the form of a movable bearing.

26. Air conditioning system of a commercial aircraft having a ram-air heat exchanger disposed at the exit of a ram-air duct (2) as well as a ram-air intake according to claim 25, **characterized in that** the lever fastening of the rear flap (4) is provided in the form of a flexing operation.

## Revendications

1. Système de conditionnement d'air d'un avion de transport de passagers, comprenant un échangeur thermique à pression dynamique placé à la sortie d'un canal de pression dynamique (2) et une admission de pression dynamique composée d'un canal de pression dynamique (2) avec une admission de canal dont la section d'admission ouverte (14) est insérée dans le contour extérieur d'une structure d'avion au niveau du bord avant (12) d'une aile portante (1), le canal de pression dynamique (2) étant, de-là, prolongé à l'intérieur de l'aile portante (1) avec une section de canal ouverte (15) et placé le long de la corde d'aile (23) ou parallèle ou à peu près parallèle à la corde d'aile (23) du profil d'aile portante, dans la profondeur de l'aile portante (t), avec un volet d'admission de pression dynamique intégré (13) qui est monté mobile en rotation à l'intérieur du canal et un actionneur (8) qui est couplé mécaniquement avec le volet d'admission de pression dynamique (13) pour ouvrir et fermer la section d'admission (14) du canal de pression dynamique (2), **caractérisé en ce que** le volet d'admission de pression dynamique (13) comprend un volet avant (3) et un volet arrière (4) qui sont placés dans le canal de pression dynamique (2) et reliés de façon articulée l'un à l'autre à l'aide d'un palier (16), le volet avant (3) étant monté basculant sur un premier palier (16A) près de la section d'admission (14) et le volet arrière (4) étant monté basculant sur un deuxième palier (16B) et le palier (16) reliant de façon articulée les volets (3, 4) étant réalisé par un troisième palier qui est placé entre le premier palier (16A) et le deuxième palier (16B), le volet avant (3) et le volet arrière (4) étant placés l'un derrière l'autre dans le canal de pression dynamique (2) dans le sens de la profondeur de l'aile portante (t) et les paliers (16A, 16B, 16) des volets (3, 4) présentant des axes de palier (17, 17A, 17B) s'étendant chacun dans le sens de l'envergure de l'aile portante (S), et **en ce que** le premier volet (3) est bombé concave vers l'extérieur et est, à l'état fermé, adapté au contour de l'aile portante dans la zone du bord avant (12) d'une aile, et le premier volet (3) et le deuxième volet (4) prennent à l'état ouvert une position allongée pour libérer entièrement la section du canal ouverte (15), la section d'admission (14) étant en partie ouverte du fait des positions intermédiaires du volet d'admission de pression dynamique (13).

2. Système de conditionnement d'air d'un avion de transport de passagers, comprenant un échangeur thermique à pression dynamique placé à la sortie d'un canal de pression dynamique et une admission de pression dynamique selon la revendication 1, **caractérisé en ce que** le troisième palier (16) est un palier libre et le premier palier (16A), un palier fixe, et le deuxième palier (16B), un palier libre ou un palier fixe.

3. Système de conditionnement d'air d'un avion de transport de passagers, comprenant un échangeur thermique à pression dynamique placé à la sortie d'un canal de pression dynamique et une admission de pression dynamique selon la revendication 1 ou 2, **caractérisé en ce que** le volet avant (3) est fixé d'un côté au premier palier (16A) conçu comme palier fixe et monté mobile en rotation et basculant autour d'un premier point de rotation (5) qui est placé sur un premier axe (17a) de ce palier fixe, et **en ce que** le volet arrière (4) est fixé d'un côté au deuxième palier (16B) conçu comme palier libre et monté mobile en rotation et basculant autour d'un deuxième point de rotation (7) qui est placé sur un deuxième axe de palier (17b) modifiable longitudinalement par rapport à l'axe de ce palier libre, et par ailleurs **en ce que** les volets avant et arrière (3, 4) sont fixés de l'autre côté au troisième palier (16) conçu comme palier libre et montés mobiles en rotation et basculants autour du troisième point de rotation (6) qui est placé sur un troisième axe de palier (17) modifiable longitudinalement et/ou perpendiculairement par rapport à l'axe de ce palier libre.

4. Système de conditionnement d'air d'un avion de transport de passagers, comprenant un échangeur thermique à pression dynamique placé à la sortie d'un canal de pression dynamique et une admission de pression dynamique selon la revendication 1 ou 2, **caractérisé en ce que** le volet arrière (4) est réalisé à partir du regroupement d'un premier volet arrière (4A) et d'un deuxième volet arrière (4B) qui sont placés l'un derrière l'autre, la mobilité en rotation du premier et du deuxième volet arrière (4A, 4B) étant assurée par un quatrième palier supplémentaire (16C).

5. Système de conditionnement d'air d'un avion de transport de passagers, comprenant un échangeur thermique à pression dynamique placé à la sortie d'un canal de pression dynamique et une admission de pression dynamique selon la revendication 4, **caractérisé en ce que** le premier volet arrière (4A) est fixé d'un côté au deuxième palier (16B) conçu comme palier fixe et monté mobile en rotation et basculant autour d'un deuxième point de rotation (7) qui est placé sur le deuxième axe (17b) de ce palier fixe, et **en ce que** le deuxième volet arrière (4B) est fixé d'un côté au troisième palier (16) conçu comme palier libre et monté mobile en rotation et basculant autour du troisième point de rotation (6) qui est placé sur le troisième axe de palier (17) modifiable axialement et/ou perpendiculairement à l'axe du palier libre, et par ailleurs **en ce que** le premier et le deuxième volet arrière (4A, 4B) sont fixés de l'autre côté au quatrième palier (16C) conçu comme palier libre et montés mobiles en rotation et basculants autour du quatrième point de rotation (25) qui est placé sur un quatrième axe de palier (17c) modifiable longitudinalement et/ou perpendiculairement à l'axe du palier libre.

6. Système de conditionnement d'air d'un avion de transport de passagers, comprenant un échangeur thermique à pression dynamique placé à la sortie d'un canal de pression dynamique et une admission de pression dynamique selon l'une des revendications 1 à 5, **caractérisé en ce que** le volet avant (3) est bombé concave et le volet arrière (4) ou le premier et le deuxième volet arrière (4A, 4B) sont conçus avec une surface plane et non bombés, les volets étant toutefois de longueur différente.

7. Système de conditionnement d'air d'un avion de transport de passagers, comprenant un échangeur thermique à pression dynamique placé à la sortie d'un canal de pression dynamique et une admission de pression dynamique selon la revendication 6, **caractérisé en ce que** la longueur du premier volet arrière (4A) est égale ou supérieure à la longueur du deuxième volet arrière (4B).

8. Système de conditionnement d'air d'un avion de transport de passagers, comprenant un échangeur thermique à pression dynamique placé à la sortie d'un canal de pression dynamique et une admission de pression dynamique selon l'une des revendications 1 à 7, **caractérisé en ce qu'**un échangeur thermique à pression dynamique est placé à la sortie du canal de pression dynamique (2), la pression dynamique (18), qui provient de l'environnement (19) proche de l'aile de l'avion et afflue pendant le vol à la section d'admission, passe dans le canal et - dans la mesure où la section d'admission (14) n'est pas fermée par le volet d'admission (13) de pression dynamique - atteint et refroidit l'échangeur thermique à pression dynamique (9) avant d'être acheminé en tant qu'air sortant (18a) vers un canal d'évacuation (10) monté en aval de l'échangeur thermique à pression dynamique (9) pour être évacué dans l'environnement (19) de l'avion.

9. Système de conditionnement d'air d'un avion de transport de passagers, comprenant un échangeur thermique à pression dynamique placé à la sortie d'un canal de pression dynamique et une admission de pression dynamique selon l'une des revendications 1 à 8, **caractérisé en ce que** le contour du volet avant (3) est bombé concave vers l'extérieur et le contour de l'aile portante au niveau du bord avant de l'aile (12) est adapté de sorte que, à l'état fermé par les volets de la section d'admission (14), la zone de surface du bord avant (12) de l'aile n'engendrera aucune ou qu'une faible augmentation de la résistance totale de l'avion ni quelconques effets correspondants de décollement d'un flux d'air entourant l'aile portante (1).

10. Système de conditionnement d'air d'un avion de transport de passagers, comprenant un échangeur thermique à pression dynamique placé à la sortie d'un canal de pression dynamique et une admission de pression dynamique selon la revendication 9, **caractérisé en ce que** le montage mobile en rotation du volet avant (3) autour du premier et du deuxième point de rotation (5, 6) est conçu pour que le volet avant (3) de pression dynamique reproduise fidèlement le contour de l'aile portante.

11. Système de conditionnement d'air d'un avion de transport de passagers, comprenant un échangeur thermique à pression dynamique placé à la sortie d'un canal de pression dynamique et une admission de pression dynamique selon l'une des revendications 1 à 10, **caractérisé en ce que** l'actionneur (8) renferme un moteur pas à pas réglable en continu.

12. Système de conditionnement d'air d'un avion de transport de passagers, comprenant un échangeur thermique à pression dynamique placé à la sortie d'un canal de pression dynamique et une admission de pression dynamique selon la revendication 11, **caractérisé en ce que** dans chacune des positions de réglage du moteur pas à pas le volet avant (3) est amené dans une position forcée et que, à partir du contour de l'entrée du canal et du contour du volet avant (3) ainsi positionné, il est réalisé une géométrie en forme de buse de l'admission de pression dynamique.

13. Système de conditionnement d'air d'un avion de transport de passagers, comprenant un échangeur thermique à pression dynamique placé à la sortie d'un canal de pression dynamique et une admission de pression dynamique selon l'une des revendications 1 à 12, **caractérisé en ce que** l'entrée du canal est placée sur l'aile portante (1) au point de pression maximale du flux d'air arrivant sur l'aile portante (1).

14. Système de conditionnement d'air d'un avion de transport de passagers, comprenant un échangeur thermique à pression dynamique placé à la sortie d'un canal de pression dynamique et une admission de pression dynamique selon la revendication 1, 2 ou 3, **caractérisé en ce que** le plafond du canal (20) est réalisée de manière massive et présente au moins une réservation, laquelle ouvre une zone de surface déterminée du plafond (20) du canal, laquelle garantit la réalisation aisée du troisième palier (16) conçu comme palier libre et des volets avant et arrière (3, 4) montés mobiles en rotation à ce dernier.

15. Système de conditionnement d'air d'un avion de transport de passagers, comprenant un échangeur thermique à pression dynamique placé à la sortie d'un canal de pression dynamique et une admission de pression dynamique selon les revendications 4 et 14, **caractérisé en ce que** la réservation permet en outre de réaliser aisément le quatrième palier (16C) comme palier libre.

16. Système de conditionnement d'air d'un avion de transport de passagers, comprenant un échangeur thermique à pression dynamique placé à la sortie d'un canal de pression dynamique et une admission de pression dynamique selon les revendications 1 et 2, **caractérisé en ce que** le moteur de l'actionneur et le troisième palier (16) conçu comme palier libre sont mécaniquement couplés à l'aide d'une tringle permettant de transmettre audit palier libre un mouvement rectiligne effectué par l'actionneur.

17. Système de conditionnement d'air d'un avion de transport de passagers, comprenant un échangeur thermique à pression dynamique placé à la sortie d'un canal de pression dynamique et une admission de pression dynamique selon la revendication 3, **caractérisé en ce que** le premier palier (16A) conçu comme palier fixe est placé stationnaire et le deuxième palier (16B) conçu comme palier libre est placé déplaçable le long de la profondeur de l'aile portante (t).

18. Système de conditionnement d'air d'un avion de transport de passagers, comprenant un échangeur thermique à pression dynamique placé à la sortie d'un canal de pression dynamique et une admission de pression dynamique selon la revendication 3, **caractérisé en ce que** le deuxième palier (16B) conçu comme palier libre est un palier axial, lequel est placé mobile sur rail.

19. Système de conditionnement d'air d'un avion de transport de passagers, comprenant un échangeur thermique à pression dynamique placé à la sortie d'un canal de pression dynamique et une admission de pression dynamique selon la revendication 17, **caractérisé en ce que** le mouvement de l'actionneur consiste en un mouvement de compression ou un mouvement de traction qui est transmis au troisième palier (16) conçu comme palier libre, si bien que le volet avant (3) pourra réaliser un mouvement orienté vers le fond du canal (21) et en même temps vers la section d'admission (14), et le volet arrière (4), effectuer un mouvement de descente vers le fond du canal (21) ou inversement.

20. Système de conditionnement d'air d'un avion de transport de passagers, comprenant un échangeur thermique à pression dynamique placé à la sortie d'un canal de pression dynamique et une admission de pression dynamique selon la revendication 1, 2 ou 3, **caractérisé en ce que** l'entrée du canal est renforcée sur le plan structurel par une butée (11) en forme de plaque qui interagit avec le volet d'admission à pression dynamique (13) ou avec le troisième palier (16), et qui est placée sur le fond du canal (21) à proximité du bord avant de l'avion (12).

21. Système de conditionnement d'air d'un avion de transport de passagers, comprenant un échangeur thermique à pression dynamique placé à la sortie d'un canal de pression dynamique et une admission de pression dynamique selon les revendications 3 et 20, **caractérisé en ce que** le volet avant (3) et/ou le troisième palier (16) conçu comme palier libre sont positionnés sur la butée (24) lorsque la section d'admission (14) est fermée par le volet avant d'admission à pression dynamique (3).

22. Système de conditionnement d'air d'un avion de transport de passagers, comprenant un échangeur thermique à pression dynamique placé à la sortie d'un canal de pression dynamique et une admission de pression dynamique selon la revendication 1, 2 ou 3, **caractérisé en ce qu'**un ressort précontraint de rigidité déterminée est placé au lieu ou en plus de l'actionneur (8), lequel ressort est régulé en pression en raison de la pression dynamique (18) de l'air sous pression dynamique agissant sur l'entrée du canal du fait du mouvement de l'avion.

23. Système de conditionnement d'air d'un avion de transport de passagers, comprenant un échangeur thermique à pression dynamique placé à la sortie d'un canal de pression dynamique et une admission de pression dynamique selon la revendication 22, **caractérisé en ce que** le ressort est un ressort de compression qui est monté en parallèle par rapport à l'actionneur (8) et fixé par une de ses extrémités à la structure de l'aile portante (12) et dont l'autre extrémité transmet la pression du ressort au troisième palier (16) conçu comme palier libre.

24. Système de conditionnement d'air d'un avion de transport de passagers, comprenant un échangeur thermique à pression dynamique placé à la sortie d'un canal de pression dynamique et une admission de pression dynamique selon l'une des revendications 1 à 3, **caractérisé en ce que** le plafond du canal (20) est formé par les volets avant et arrière (3, 4) placés le long de la corde d'aile (23) ou parallèle ou à peu près parallèle à la corde d'aile (23).

25. Système de conditionnement d'air d'un avion de transport de passagers, comprenant un échangeur thermique à pression dynamique placé à la sortie d'un canal de pression dynamique et une admission de pression dynamique selon la revendication 1, 2 ou 3 **caractérisé en ce qu'**un levier supplémentaire (27) est monté mobile en rotation sur le deuxième palier (16B) conçu comme palier fixe, à l'extrémité libre duquel le volet arrière (4) est fixé à peu près d'aplomb par rapport au volet avec l'extrémité qui n'est pas montée mobile en rotation sur le troisième palier (16) conçu comme palier libre.

26. Système de conditionnement d'air d'un avion de transport de passagers, comprenant un échangeur thermique à pression dynamique placé à la sortie d'un canal de pression dynamique et une admission de pression dynamique selon la revendication 25, **caractérisé en ce que** la fixation du levier du volet arrière (4) est prévue sous forme de coude.
